(19) Europäisches Patentamt
European Patent Office
Office européen des brevets

(11) **EP 2 727 359 B1**

(12) **EUROPEAN PATENT SPECIFICATION**

(45) Date of publication and mention
of the grant of the patent:
**07.08.2019 Bulletin 2019/32**

(21) Application number: **12805401.2**

(22) Date of filing: **27.06.2012**

(51) Int Cl.:
*H04N 19/523* (2014.01)       *H04N 19/52* (2014.01)
*H04N 19/102* (2014.01)      *H04N 19/14* (2014.01)
*H04N 19/176* (2014.01)      *H04N 19/192* (2014.01)

(86) International application number:
**PCT/SE2012/050716**

(87) International publication number:
**WO 2013/002716 (03.01.2013 Gazette 2013/01)**

(54) **A METHOD AS WELL AS A DECODER AND ENCODER FOR PROCESSING A MOTION VECTOR**

VERFAHREN, DEKODIERER UND KODIERER ZUR VERARBEITUNG EINES BEWEGUNGSVEKTORS

PROCÉDÉ POUR UN DÉCODEUR ET UN CODEUR PERMETTANT DE TRAITER UN VECTEUR DE MOUVEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2011 US 201161502937 P**

(43) Date of publication of application:
**07.05.2014 Bulletin 2014/19**

(73) Proprietor: **Telefonaktiebolaget LM Ericsson
(publ)
164 83 Stockholm (SE)**

(72) Inventors:
• **STRÖM, Jacob
S-11732 Stockholm (SE)**
• **SJÖBERG, Rickard
S-11336 Stockholm (SE)**
• **SAMUELSSON, Jonatan
S-11250 Stockholm (SE)**

(74) Representative: **Zacco Sweden AB
Valhallavägen 117
Box 5581
114 85 Stockholm (SE)**

(56) References cited:
**WO-A1-2011/046587      US-A1- 2010 316 127
US-A1- 2011 038 419**

• **LIWEI GUO ET AL: "Adaptive motion vector resolution with implicit signaling", INTERNATIONAL CONF. ON IMAGE PROCESSING (ICIP 2010), USA, 26 September 2010 (2010-09-26), pages 2057-2060, XP031812078, ISBN: 978-1-4244-7992-4**
• **MRAK M ET AL: "Scalable Generation and Coding of Motion Vectors for Highly Scalable Video Coding", 24. PICTURE CODING SYMPOSIUM;15-12-2004 - 17-12-2004; SAN FRANSISCO,, 15 December 2004 (2004-12-15), XP030080201,**
• **LIWEI GUO ET AL.: 'Adaptive motion vector resolution with implicit signalling' 2010 PROCEEDINGS OF 17TH IEEE INTERNATIONAL CONFERENCE ON IMAGE PROCESSING (ICIP 2010) 26 September 2010, PISCATAWAY, NJ, USA, pages 2057 - 2060, XP031812078**
• **MCCANN K ET AL.: 'SAMSUNG'S RESPONSE TO THE CALL FOR PROPOSALS ON VIDEO COMPRESSION TECHNOLOGY' JOINT COLLABORATIVE TEAM ON VIDEO CODING (JCT-VC) OF ITU-T SG16 WP3 AND ISO/IEC JTC1/SC29/WG11, JCTVC-A124, 1ST MEETING, [Online] 15 April 2010 - 23 April 2010, DRESDEN, DE, pages 1 - 40, XP002649004 Retrieved from the Internet: <URL:HTTP://WFTP3. ITU.INT/AV-ARCH/JCTVC-SITE/>**

- **KYUNGMIN JO ET AL.: 'Improved Adaptive Motion Vector Resolution Using Decoder Estimation' WORKSHOP ON PICTURE CODING AND IMAGE PROCESSING 2010 12 July 2010, NAGOYA, pages 39 - 40, XP030082087**

- **CHIEN W-J ET AL.: 'CE12: Adaptive Motion Vector Resolution from Qualcomm' 95. MPEG MEETING (MOTION PICTURE EXPERT GROUP OR ISO/IEC JTC1/SC29/WG11) 24 January 2011 - 28 January 2011, DAEGU, KR, XP030008433**

**Description**

TECHNICAL FIELD

The present document describes a method in a decoder or an encoder for determining the resolution of a motion vector to be applied in a specific location. The present document also discloses a decoder and an encoder which are configured to execute such a method.

BACKGROUND

Recent video coding standards are based on the hybrid coding principle, which comprises motion compensated temporal prediction of video frames and coding of frame residual signals. For efficient motion compensated temporal prediction, block-based motion models are used to describe motion across e.g. pairs of frames. Each motion compensation block is assigned e.g. one (for uni-predictive temporal prediction, e.g. in P frames) or two (for bi-predictive temporal prediction in B frames) motion vectors. These vectors need to be coded in the video bit stream along with the frame residual signals. At high compression ratios (or equivalently, low video bitrates), motion vector coding takes a large part of the total amount of bits, especially in recent video coding standards, such as e.g. H.264/ Advanced Video Coding (AVC), where small motion compensation block sizes are used. Typically, lossless predictive coding of motion vectors is used, i.e. coding of a motion vector (mv) consists of (1) building a motion vector predictor mvP for the vector to be coded and (2) transmitting the difference (mvD) between the motion vector and the motion vector predictor to a decoder. i.e.

$$mvD = mv - mvP \tag{1}$$

The resolution with which the mvD is sent is typically $1/4^{th}$ of a pixel, which means that the motion vector mv will also get quarter pixel resolution. This is typically referred to in the literature as "quarter pixel resolution". To still be able to treat integer numbers, multiplication by four is used. A motion vector of (4, -6) thus means one pixel to the right and one-and-a-half pixels up.

The mvD is typically sent either using a low-complexity variable length coding scheme, or using an arithmetic encoder. The variable length coding scheme typically uses bit patterns as illustrated in Table 1a below, where each value represents an associated code:

Table 1a.

| Value | code | Bit length |
|---|---|---|
| 0 | 1 | 1 |
| 1 | 010 | 3 |
| -1 | 011 | 3 |
| 2 | 00100 | 5 |
| -2 | 00101 | 5 |
| 3 | 00110 | 5 |
| -3 | 00111 | 5 |
| 4 | 0001000 | 7 |
| -4 | 0001001 | 7 |
| 5 | 0001010 | 7 |
| -5 | 0001011 | 7 |
| 6 | 0001100 | 7 |
| -6 | 0001101 | 7 |
| 7 | 0001110 | 7 |
| -7 | 0001111 | 7 |

(continued)

| Value | code | Bit length |
|---|---|---|
| 8 | 000010000 | 9 |
| -8 | 000010001 | 9 |
| 9 | 000010010 | 9 |
| -9 | 000010011 | 9 |
| … | … | … |

Note that the mvD contains both an x-coordinate and a y-coordinate; hence during encoding/decoding Table 1a must be used twice, once for each coordinate. Note also that in a real encoder/decoder, a table such as Table 1a is not used during encoding/decoding, since this table is infinitely long. Instead a computer subroutine is typically employed to encode the value to bits and vice versa.

When a variable length coding scheme is used, each bit has an equal probability of being '0' or '1'. In the up-coming HEVC-standard, the mvD is typically sent using arithmetic coding, which allows for uneven bit probabilities. In this case, a similar table is used with a few differences, as shown in Table 1b. The first observation is that the first bit in Table 1a describes whether or not the value is zero. This does not have to be of equal probability and is therefore sent using a context pCtx[0] that adapts the probability according to the number of occurrences of zero and nonzero values, as shown in the second column in Table 1b. The second observation is that, for non-zero values, the second bit of the code in Table 1a describes whether the value is +/- 1 (bit equals '1') or it has any other value (bit equals '0'). The probability of this bit being 1 may also be significantly different from 0.5 and can be adapted using a context pCtx[1] as shown in the third column in Table 1b. The third observation is that the last bit in Table 1a encodes the sign for all values except zero, which does not have a sign. Hence this can still be sent using equal probability. The difference in Table 1b is that this bit is sent before the remaining bits. The rest of the bits (column 5 of Table 1b) can be sent with equal probability.

Table 1b.

| Value | code (context pCtx[0]) | code (context pCtx[1]) | code (sign bit) | code (rest of bits) | Bit length |
|---|---|---|---|---|---|
| 0 | 1 | | | | 1 |
| 1 | 0 | 1 | 0 | | 3 |
| -1 | 0 | 1 | 1 | | 3 |
| 2 | 0 | 0 | 0 | 10 | 5 |
| -2 | 0 | 0 | 1 | 10 | 5 |
| 3 | 0 | 0 | 0 | 11 | 5 |
| -3 | 0 | 0 | 1 | 11 | 5 |
| 4 | 0 | 0 | 0 | 0100 | 7 |
| -4 | 0 | 0 | 1 | 0100 | 7 |
| 5 | 0 | 0 | 0 | 0101 | 7 |
| -5 | 0 | 0 | 1 | 0101 | 7 |
| 6 | 0 | 0 | 0 | 0110 | 7 |
| -6 | 0 | 0 | 1 | 0110 | 7 |
| 7 | 0 | 0 | 0 | 0111 | 7 |
| -7 | 0 | 0 | 1 | 0111 | 7 |
| 8 | 0 | 0 | 0 | 001000 | 9 |
| -8 | 0 | 0 | 1 | 001000 | 9 |
| 9 | 0 | 0 | 0 | 001001 | 9 |
| -9 | 0 | 0 | 1 | 001001 | 9 |

(continued)

| Value | code (context pCtx[0]) | code (context pCtx[1]) | code (sign bit) | code (rest of bits) | Bit length |
|-------|------------------------|------------------------|-----------------|---------------------|------------|
| ... | ... | ... | ... | ... | ... |

As can be seen in Table 1a, small table entries, as illustrated in the "Value" column get a short bit length, whereas larger values get longer code words. As an example, sending the mvD (4, -6) would generate the bit sequence 00010000001101, which makes 14 bits (7 + 7) in total.

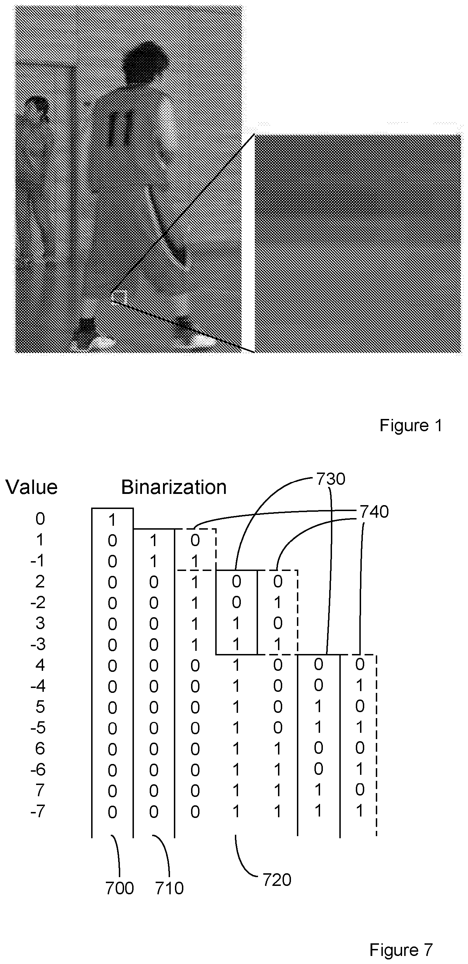

Motion compensation using quarter pixel resolution has proved to be an efficient tool to generate high-quality video with a limited amount of bits. However, in some cases this relatively high resolution will be a waste of bits. Assume for example that we want to predict from the block indicated in the lower part of the image shown to the left of Fig. 1, and illustrated as a highlighted block to the right in Fig. 1.

As can be seen in Fig. 1, the block shows a very sharp transition in the y-direction, i.e. in the vertical direction, showing a distinct change in the grey scale. This means that if we predict from this block, it is important to get the vertical component of the motion vector correct down to the quarter pixel level. Otherwise the result will be a huge difference in the predicted image, which will be costly to send.

In the x-direction, i.e. in the horizontal direction, on the other hand, the block does not vary so much. In this direction a pixel will therefore more or less have the same colour as the pixel to the left or right of it. This means that in this direction a quarter pixel resolution should be unnecessarily accurate. Instead a half-pixel, or even an integer pixel resolution in the x-direction would do just fine for the final result.

A considerable problem with state-of-the-art codecs is that they do not allow change of the resolution of the motion vectors. Instead the codec is always applying quarter pixel resolution, irrespectively if such a resolution is actually needed or not. Hence, a lot of bits are wasted on sending too accurate motion vector data, resulting in an inefficient bit stream.

LIWEI GUO ET AL, "Adaptive motion vector resolution with implicit signalling", proposes an adaptive motion vector resolution scheme to improve the coding efficiency. The scheme is based on an analytical model of motion compensated residue.

WO 2011/046587 discloses an adaptive motion vector accuracy scheme for selecting an accuracy of the motion vector used to encode a block.

SUMMARY

The problem as mentioned above can be addressed by applying any of the embodiments described as illustrative examples below. The invention is set out in the appended set of claims.

According to one aspect, a method to be executed in a decoder is provided for determining the resolution of a motion vector specifying a reference block, on the basis of the smoothness of pixels in a block, where the position of this block is an approximation of the position of the reference block.

More specifically, a method comprising a plurality of steps can be provided where in a first step, an adaptable motion vector difference, mvD, is received from a data source, and decoded. Next, a first motion vector is calculated on the basis of the adaptable mvD, after which the following steps are executed in at least one direction. At least some pixels of the block are investigated, by calculating at least one smoothness value in a respective direction, and one or more further bits associated with the first motion vector in the respective direction from a data source, after which a second motion vector is calculated from a combination of the adaptable mvD and the further bits, in case the at least one smoothness value indicates that the block is not smooth.

According to an alternative step, the investigating and reception steps may be repeated one or more times, until the block is considered to be smooth.

According to another alternative embodiment, the described method, applying an adaptable mvD may be used only under certain conditions, i.e. when the value of the adaptable mvD is comprised in a first set of values. Such a first set of values may typically comprise the lower values, or table entries, -1, 0 and 1.

Either one or a plurality of smoothness values may be calculated, where at least one of the smoothness values in a respective direction may be based on the gradient calculated in the respective direction for a predefined plurality of pixels, associated with the block.

One or more of such a smoothness value may be based on at least one of: the average of the absolute values or the squared values of said calculated values in the respective direction; the sum of the absolute values or the squared values of said calculated values in the respective direction, and the maximum of the absolute values or the squared values of said calculated values in the respective direction.

Typically, in the investigating step it is determined that the block is smooth, in case each of the one or more smoothness values is below a respective threshold value.

One or more threshold value may also be configured as a dynamic threshold value where the dynamic threshold value is determined on the basis of the presently applied bit rate, wherein the threshold value is higher the lower the applied bit rate.

The decoding is typically based on a table of values arranged such that a set of lower values have a finer pixel resolution than each further set of higher values.

According to another aspect, a decoder is provided which comprises a processor and a memory which is capable of storing instructions which when executed by the processor causes the processor to determine the resolution of a motion vector specifying a reference block, on the basis of the smoothness of pixels in a block, where the position of this block is an approximation of the position of the reference block.

More specifically, such a decoder comprises instructions which when executed by the processor causes the processor to receive an adaptable motion vector difference, mvD, from a data source; decode the adaptable mvD and calculate a first motion vector on the basis of the adaptable mvD. The method also comprises the following steps to be executed in at least one direction: investigate at least some pixels of said block, by calculating at least one smoothness value in a respective direction, and receive one or more further bits associated with said first motion vector in the respective direction, and calculating a second motion vector from a combination of said adaptable mvD and said further bits, in case the at least one smoothness value indicates that the block is not smooth.

According to another aspect, a method to be executed in an encoder for determining the resolution of a motion vector specifying a reference block, on the basis of the smoothness of pixels in a block, is provided, where the position of this block is an approximation of the position of the reference block.

The suggested encoder may be configured to transmit, an encoded adaptable motion vector difference, mvD, to a receiving entity, and investigate at least some pixels of said block, by calculating at least one smoothness value in a respective direction, and the further bits, to said receiving entity, in case the at least one smoothness value indicates that the block is not smooth.

In resemblance to the method executed in a decoder, the steps may be repeated until the block is deemed to be smooth, and also restricted such that the smoothness is only considered in case the value of the adaptable mvD is comprised in a first set of lower values.

According to another aspect, an encoder is provided which comprises a processor and a memory capable of storing instructions which when executed by the processor causes the processor to determine the resolution of a motion vector specifying a reference block, on the basis of the smoothness of pixels in a block, where the position of the block is an approximation of the position of the reference block.

Such an encoder may have instructions stored therein which when executed by the processor causes the processor to: transmit, to a receiving entity, an encoded adaptable motion vector difference, mvD, and investigate at least some pixels of said block, by calculating at least one smoothness value in a respective direction, and transmit one or more further encoded bits associated with said adaptable mvD and said further bits, to said receiving entity, in case the at least one smoothness value indicates that the block is not smooth.

According to yet another aspect, a computer program, comprising computer readable code storable on a memory of a decoder is provided, said computer readable code, when operated by a processor of the decoder, is configured to cause the decoder to operate as a decoder according to any of the embodiments described above.

According to yet another aspect, a computer program product comprising a computer readable medium and a computer program is provided, wherein the computer program is stored on the computer readable medium.

BRIEF DESCRIPTION OF THE DRAWINGS

The objects, advantages and effects, as well as features of the embodiments described herein, will be more readily understood from the following detailed description of exemplary embodiments when read together with the accompanying drawings, in which:

Fig. 1 is illustrating an image and a selected highlighted part of that image.
Fig. 2a-2e is a series of figures illustrating the use of an adaptable mvD.
Fig. 3 is a flow chart illustrating a method executed in a decoder.
Fig. 4 is a flow chart illustrating a method executed in an encoder, according to a second embodiment.
Fig. 5 is a flow chart illustrating a method executed in a decoder, according to a second embodiment.
Fig. 6 is a flow chart illustrating a method executed in an encoder, according to a second embodiment.
Fig. 7 is a table for applying binarization in association with an adaptable mvD.
Fig. 8 is a block scheme illustration a configuration of an encoder according to one embodiment.
Fig. 9 is a block scheme illustrating a configuration of a decoder according to one embodiment.

DETAILED DESCRIPTION

While this document covers various modifications and alternative constructions, embodiments as described herein are shown in the drawings and will hereinafter be described in detail. However it is to be understood that the specific description and drawings are not intended to limit the described technical concept to the specific forms disclosed herein.

This document discloses a method for adapting the resolution used in an encoder, as well as in a decoder, such that instead of using e.g. a quarter pixel resolution unconditionally for mvDs, by using a decoded image as a guide, the quarter pixel resolution will be used only when it is considered that this is actually required, while a lower pixel resolution may be used otherwise. As will be described in further detail below, considerations for determining what level of resolution that is required, may be executed in alternative ways.

In other words, a method is executed in the decoder where the resolution of a motion vector, specifying a reference block, is determined, on the basis of the smoothness of pixels in a block. Here, the position of the latter block is an approximation of the position of the reference block. By analyzing the area from which a prediction, as described above, is to be made, it will be possible to decide an appropriate resolution to be applied for that area or block. Using the example given above, with reference to Fig. 1, the x-component would, e.g. according to one embodiment, be given the resolution of half a pixel, whereas the y-component would get the resolution of a quarter of a pixel, due to a more distinct transition in the grey-scale for the latter component.

More specifically, a method is suggested where an mvD, from hereinafter referred to as an adaptable mvD, due to its adaptable character, is initially sent from an encoder to a decoder. The decoder receives and decodes the mvD, calculates an adaptable motion vector by adding the predicted motion vector,

$$\text{adaptable motion vector} = \text{mvP} + \text{adaptable mvD}.$$

The decoder then investigates the pixels of a block at a location in the decoded/reconstructed version of the reference picture which may be referred to as a rough location, to which the adaptable motion vector points. Such an investigation is executed by calculating a smoothness measure for one or more directions of a block. In this context the smoothness measure in a specific direction is an indication of the relative sharpness in the respective direction.

If, for a specific direction in the block, the smoothness measure indicates that the block is smooth, the adaptable mvD, having a relatively low resolution, which was initially sent, is considered to be sufficient for the decoder in that specific direction, i.e. no adaptation to the adaptable mvD will be required, and the adaptable motion vector can be used as motion vector, while in case the block is considered to be non-smooth, one or more additional bits will be provided from the encoder to the decoder, where the additional bits and the adaptable mvD are combined, resulting in a motion vector difference having a higher accuracy, than if only the original adaptable mvD was to be used. Typically a corresponding procedure is executed in each direction, i.e. if x- and y-directions are applied, the components relevant for the x- and y-direction are typically investigated separately.

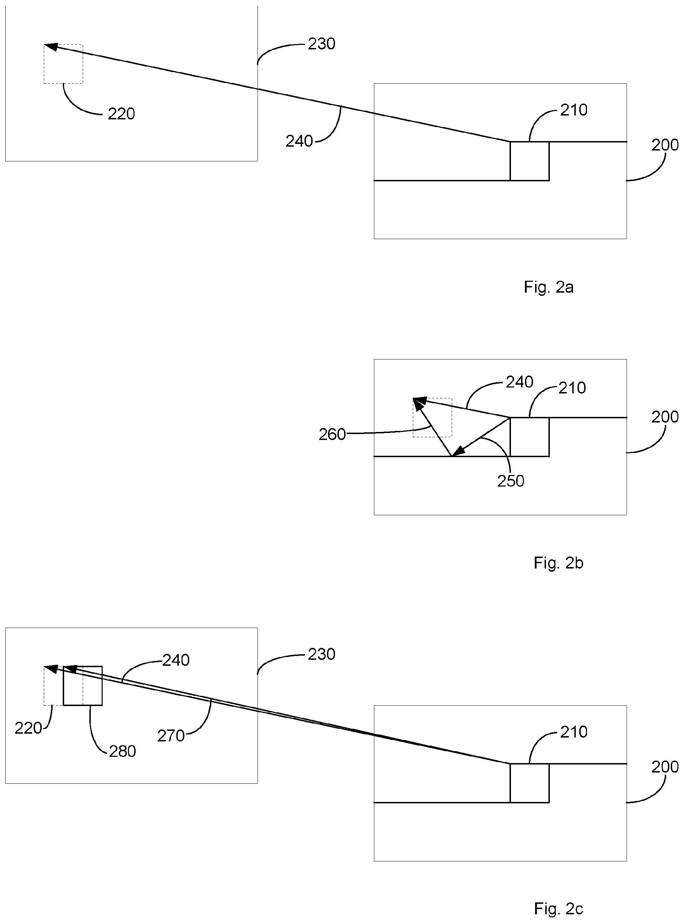

Fig 2a-2e is a series of illustrations illustrating how an adaptive approach to the accuracy used during encoding and decoding can be achieved. Fig. 2a describes a picture about to be encoded, which is typically referred to as the current picture 200, e.g. picture nr 54, in a sequence of pictures, where the block to be encoded is referred to as the current block 210. When encoding the encoder is capable of determine that the reference block 220 is the one that best matches the current block 210 to a reasonable bit cost, and pixels are therefore fetched from a reference block 220 located within a reference picture 230, which here is a previously decoded picture, e.g. picture 53, in the sequence of pictures. The reference block is pointed to by a motion vector 240.

In Figure 2b the reference picture 230 and the current picture 200 are put in the same coordinate system, so that it is easy to see if a motion vector is long or not. If the reference block 220 has the same coordinates as the current block 210 (i.e., they occupy the same position in the video frame) then the motion vector will be zero.

The encoder is to inform the decoder of the motion vector 240. However, to transmit the motion vector directly would be wasteful, since it is often relatively long and thus "expensive" to transmit in terms of number of bits. In addition it will most likely not differ considerably from the previous motion vector, sent from the previous block (not shown), e.g. the block right to the left of the current block. Hence we predict the motion vector, for instance by using the previous mv: mvP = motion vector for previous block.

It should be noted that more advanced forms of motion vector prediction are used in H.264 and HEVC. Once the predicted motion vector mvP (250 in Figure 2b) is obtained, we can calculate the motion vector difference mvD:

$$\text{mvD} = \text{motion vector} - \text{mvP}$$

The mvD (260) is typically shorter than the motion vector (240), which means that it is less expensive to code. Hence the mvD is sent, as already described above.

However, according to the concept described herein mvD 260 is not sent either, since sending mvD may be more accurate than what is actually needed under the present circumstances. Instead an approximate mvD, here referred to as an adaptable mvD is sent, said adaptable mvD having only half the resolution of the original mvD, and thus not able to reach all relevant positions.

The corresponding motion vector that can be calculated from this approximate or adaptable mvD will also not be able to reach all relevant positions. Therefore it too is called approximate motion vector or adaptable motion vector. To calculate the adaptable motion vector we simply use:

$$adaptable\_mv = mvP + adaptable\_mvD.$$

To exemplify, the current block may be an 8x8 pixel block which starts at position (100,200) and ends in position (107,207), i.e. the upper left pixel is in (100,200) and the lowest right pixel is in (107,207).

The reference picture is in this case the previous picture, as indicated in the example mentioned above, and the motion vector 240 is pointing at (-11,-2). In that case the upper pixel located most to the left in the reference block is in position (100-11, 200-2) = (89, 198). This means that the pixel position (89, 198) in the reference picture shall be moved to position (100,200) in the current picture. Similarly, the pixel in (90, 198) shall be moved to (101,200) and so on, until the last pixel, i.e. (107-11, 207-2) = (96, 205) is moved to (107,207).

The given example is illustrating a full pixel resolution. Since quarter pixel resolution is applied in H.264/HEVC, the motion vector described above, i.e. (-11, -2) should be multiplied by four to get the same effect, resulting in motion vector (-44, -8).

In the present example the previous block may e.g. have motion vector (-39, 2), which is used for prediction with mvP 250 i.e.

mvP = (-39, 2)

mv = (-44, -8)

$$mvD = mv - mvP = (-5, -10)$$

According to prior art the encoder would only send mvD 260 (-5, -10).

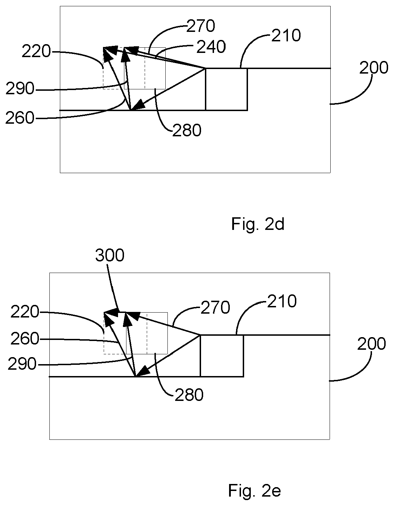

This document, however, discloses a method for determining if this accuracy will be necessary or not. Therefore an approximate or adaptable motion vector 270 is first applied, resulting from a mvD which can be referred to as an adaptable mvD 290, which in the present example may be e.g. (-4, -10), is first sent to the decoder, as shown in Fig. 2d, where picture 230 and 200 from Fig. 2c are illustrated on top of each other. This adaptable mvD is "rough" because it will only allow even positions; hence -5 is rounded down to -4, while -10 is rounded to -10. This "rough" mvD 290 (or rather the adaptable motion vector 270 calculated from it using adaptable_mv = mvP + adaptable_mvD) is now pointing at a block 280 which does not have the exact position of the reference block 220, since the reference block included pixels (89, 198) to (96, 205) while the block 280 pointed to by the adaptable mv obtained from the adaptable mvD 290 is located a quarter pixel to the right, i.e. at (89.25, 198) to (96.25, 205). This is evident from the following calculation:

$$adaptable\_mv = mvP + adaptable\_mvD = (-39, 2) + (-4, -10) = (-43, -8)$$

$$Starting\ position = (100, 200) + (-43, -8) / 4 = (100 - 10.75, 200-2) = (89.25, 198)$$

$$Ending\ position = (107, 207) + (-43, -8) / 4 = (107 - 10.75, 207-2) = (96.25, 205)$$

Note that the reason we divide by 4 is to get from quarter pixel references to full pixel references.

We should hence do the smoothness analysis on the block starting in pixel (89.25, 198) and ending in pixel (96.25, 205). However, fractional positions means that we may have to resample the image before the smoothness measure can be applied, and resampling is expensive. Instead it is possible to round the pixel positions. For instance, removing the fractional pixel coordinates would yield a starting position of (89, 198) and an ending position of (96, 205). Note however that the true ending position (96.25, 205) may now be slightly outside the rounded ending position. It may therefore be necessary to increase the size of the block, for instance to (97, 205). The block then becomes 9 pixels wide and 8 pixels high.

The gradient in each pixel may now be calculated. In order to calculate e.g. the x-gradient in pixel (89, 198), the pixel value (for instance the luminance value) at this position can be subtracted from the pixel value in the pixel to the right, i.e. (90, 198). Denote the luminance in pixel (x,y) with L(x,y). As an example, if the luminance in pixel (90, 198) equals 230 and the luminance in pixel (89, 198) equals 140 then the gradient in the x-direction can be calculated as

$$g_x(89, 198) = L(90, 198) - L(89, 198) = 230 - 140 = 90.$$

If this difference is very close to zero, this means that not much is happening in the x-direction between these two pixels. If this is true for all the pixels in the block, sending the motion vector difference with quarter pixel resolution may be unnecessary accurate. If, on the other hand, the value is far from zero (such as in this example with the difference being 90), it means that there is a rather strong change in luminance between these two pixels, and it may not be advisable to reduce the resolution of the motion vector in the x-direction.

The gradient $g_x(x,y)$ is calculated for all pixels from (89, 198) to (96, 205), after which they can be squared and added together. For instance it is possible to use:

$$s_x(x, y) = \sum_{pixels} g_x(x, y)^2 \tag{2}$$

The result will in this context be referred to as a smoothness value, where the closer to 0 this sum $s_x(x,y)$ is the smoother the block is. Dividing $s_x(x,y)$ with the number of pixels (width * height) is also possible.

If $s_x(x,y)$ is below a threshold, the block will typically be deemed smooth and in that case the process is completed for this particular block. Our reference block will thereby be specified by the adaptable mv calculated from the sent adaptable mvD. If the block is instead deemed to be non-smooth, further information, i.e., one or more further bits will have to be sent, such that, e.g., if further bits representing a difference, diff = -5 - (-4) = -1, which is illustrated as Xdiff 300 in Fig. 2e, is sent, the decoder will be able to derive an "appropriate" or "corrected" mvD by adding the difference to the originally sent adaptable mvD, i.e. -4 + (-1) = -5. The decoder will then also be able to derive the "appropriate" or "corrected" motion vector by adding mvP to the corrected mvD:

$$corrected\_mv = mvP + corrected\_mvD = (-39, 2) + (-5, -10) = (-44, -8).$$

This gives us the position of the top left pixel in the block used for examining the y-component: (100,200) + (-44,-8) /4 = (100,200) + (-11,-2) = (89, 198).

Next, the y-component may be investigated. We will now use the position of the appropriate_mv calculated above as our position for the block where we will calculate our smoothness value. The smoothness value will this time be calculated in the y-direction; $g_y(x,y) = L(x,y+1)-L(x,y)$. After that a similar sum will be formed $s_y(x,y) = \sum g_y(x,y)^2$. Assume that the result in this example is that the sum is above the threshold value, and that the residual therefore should be sent. We shall then send the difference between the adaptable mvD (-10) and the original mvD (also -10) so the total difference is zero, and the bit '0' is sent by the encoder and received in the decoder. The final corrected mvD is therefore (-5, -10) and the final corrected_mv equals

$$corrected\_mv = mvP + corrected\_mvD = (-39, 2) + (-5, -10) = (-44, -8).$$

This is the final motion vector and we can now find the position of the top left pixel in the reference block being:

$$(100,200) + (-44,-8) /4 = (100,200) + (-11,-2) = (89, 198).$$

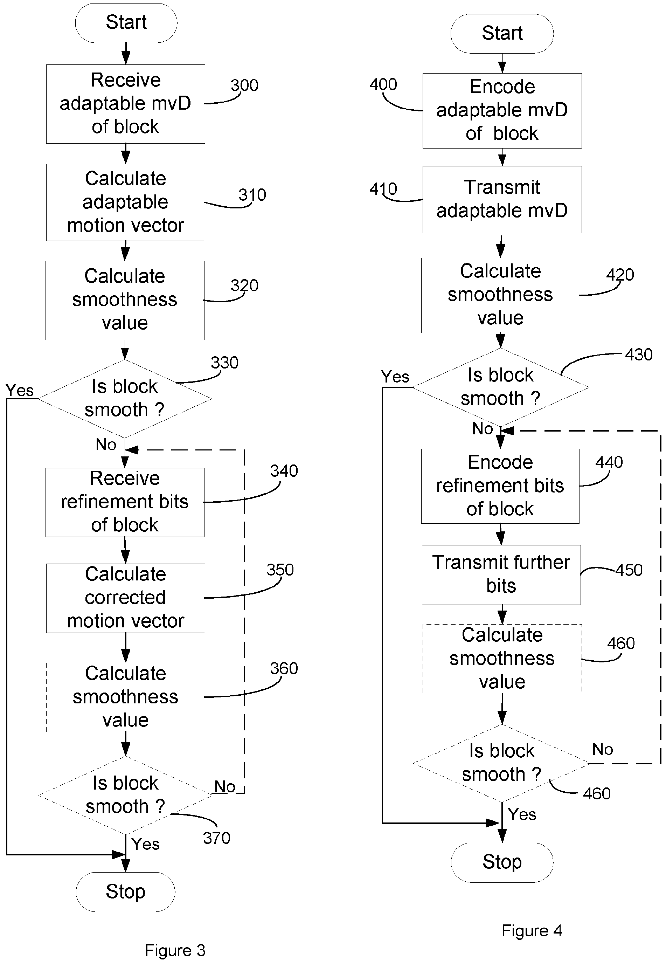

A method for providing flexible pixel resolution when executed in a decoder will now be described in further detail below, with reference to Fig. 3.

In a first step 300, the decoder receives an adaptable mvD from an encoder, which is capable of providing such an adaptable mvD. Throughout this document it is to be understood that receiving an adaptable mvD at a decoder also includes decoding of the mvD.

In a next step 310 the received adaptable mvD is used for calculating an adaptable motion vector, and in subsequent steps 320 a smoothness value is calculated from the pixels of the block pointed to by the adaptable motion vector and then, 330, the smoothness value of the block is investigated to determine if it is smooth or not. In case of e.g., an 8x8 reference block, the integer pixel position that is nearest to the rough position pointed to by the adaptable motion vector is investigated, and the block may be enlarged to, e.g., 10x10 pixels to make sure to cover the 8x8 reference block. If the block is considered to be smooth, nothing more needs to be done to the motion vector, which in the present case is equal to the adaptable motion vector that is calculated from the adaptable mvD that was received in 300. How the smoothness of the block can be determined will be described in further detail below

If, on the other hand, the block is considered not to be smooth, one or more additional bits, from hereinafter also referred to as refinement bits, will to be expected by the decoder, and thus, the ongoing process proceeds by receiving one or more additional bits, from the encoder, as indicated in step 340, before the decoder calculates a new motion vector, as indicated by step 350, by first combining the adaptable mvD with the additional refinement bit(s) using

$$corrected\_mvD = adaptable\_mvD + correction$$

and then secondly combining this with the motion vector prediction to form the corrected motion vector:

$$corrected\ motion\ vector = mvP + corrected\_mvD.$$

Optionally, the described method may be adapted such that further bits can be added in more than one step, as indicated with optional step 360, and 370, where, after a new smoothness value has been calculated, a determination of possible smoothness can be repeated. Such a process can be repeated one or more times, typically according to a pre-defined rule, each time by considering a new corrected motion vector and hence a new block found at this corrected motion vector location, and a new smoothness value calculated from the pixels of this new block, considering the additional refinement bits, to create a yet refined motion vector and so forth, until the block is deemed smooth and the motion vector is deemed to have an appropriate accuracy for the respective block. This repetition may be limited to a certain number of cycles; the preferred embodiment, for instance, has a limitation of one pass-through. This means that 360 and 370 will never be executed for the preferred embodiment.

A method executable in an encoder which is configured to provide adaptable mvDs and additional bits, whenever required, to a decoder, such as the one described above, will now be described, with reference to the flow chart of Fig. 4. In a first step 400 the encoder encodes an adaptable mvD of a block, according to a predefined bit pattern. Such a bit pattern may be arranged according to different strategies, as will be described in further detail below. In a next step 410, the adaptable mvD is transmitted to a receiving entity.

In a further step 420, a smoothness value is calculated and in a further step 430, the smoothness value is investigated. Note that the encoder must calculate the smoothness value using data that is also available to the decoder. Hence it must do its smoothness analysis on the pixels of the decoded or reconstructed pictures, rather than the original pictures. Also it must do the analysis using the adaptive motion vector calculated from the adaptive mvD, since this is the only information the decoder has available. So even if the "best" fit is mvD, the encoder must first calculate the adaptable mvD from the mvD, then calculate the adaptable motion vector from the adaptable mvD (with the help of the motion vector prediction), and then investigate the smoothness value from the pixels of the block pointed to by the adaptable motion vector.

If, in step 430 it is determined that the block is smooth, the accuracy applied for the adaptable mvD is considered to be sufficient and no further bits are sent for the respective direction of the motion vector. If, however, it is determined that the block pointed to by the adaptive motion vector is not smooth in the present direction, a higher accuracy than the one applied for the adaptable mvD will be required, and, thus, one or more further bits will be encoded in a step 440. These further bits are sent to the receiving entity to enable the receiving entity to derive a corrected motion vector accordingly. The encoder must also calculate the corrected motion vector 450, since this is necessary to do the motion compensation needed for the reconstructed picture. (The reconstructed picture is the encoder's version of the picture that the decoder will get, they must agree otherwise the decoding will diverge.)

Corresponding to the decoder, while the smoothness of a block may be evaluated in one single step, as described above, it is to be understood that the smoothness may alternatively be investigated in a plurality of steps, such that steps 440-470 are repeated, where step 460 and 470 are optional steps, allowing a new smoothness value to be calculated in case a further iteration is to be executed. When in optional step 460, it is determined that the respective block is deemed to be smooth, no more iterations will be required.

While steps 400 and 410 are typically executed once for an adaptable mvD at a rough location, the remaining steps 420-460 are normally executed separately in each of one or more relevant directions, typically in the x- and y-direction, respectively. Although, the described flow chart implies that both directions are investigated in parallel, the different directions may alternatively be investigated separately or interleaved, as will be exemplified below.

If the x- and y-directions are to be interrogated separately, this may be done in a number of alternative ways. According to one embodiment, the motion vector component in one direction, here the component in the x-direction, is first processed completely in one or more steps, as indicated in Fig. 4, before the steps starting with step 420 are repeated also in the y-direction. This may be exemplified by the following steps, where both the x- and the y- component are tested once in 430 and once in 460. The function round_to_zero(x) below rounds a number to an even number. For a positive x, it rounds to the lowest number, e.g., 9 becomes 8. For negative x, i rounds to the highest even number, e.g., -9 becomes -8.

1) Calculate mvD = mv - mvP, or in more detail:

$$(mvD.x, mvD.y) = (mv.x, mv.y) - (mvP.x, mvP.y)$$

2) Calculate the adaptable_mvD = (adaptable_mvD.x, adaptable_mvD.y) from the mvD for both dimensions x and y. This can involve rounding odd values to the even value closer to zero, for example using

adaptable_mvD.x = round_to_zero(mvD.x),
adaptable_mvD.y = round_to_zero(mvD.y).

3) Calculate the adaptable motion vector adaptable_mv = (adaptable_mv.x, adaptable_mv.y) using

$$adaptable\_mv.x = mvP.x + adaptable\_mvD.x,$$

$$adaptable\_mv.y = mvP.y + adaptable\_mvD.y.$$

4) Investigate the block in the reference picture pointed to by adaptable_mv = (adaptable_mv.x, adaptable_mv.y) in the x-direction (430).

5) The block in this position was found to be non-smooth in the x-direction, so get another bit to adapt adaptable_mvD.x into corrected_mvD.x.
if(bit = 0)
corrected_mvD.x = adaptable_mvD.x
else

$$corrected\_mvD.x = adaptable\_mvD.x + sign(adaptable\_mvD.x)$$

As an example, if adaptable_mvD.x = -4 and the bit is 1, we should move to adaptable_mvD.x one step away from zero; if it is positive, we should add one, if it is negative we should subtract one.
In the y-direction we use the old value; corrected_mvD.y = adaptable_mvD.y.

6) Calculate the corrected motion vector corrected_mv using:

$$corrected\_mv.x = mvP.x + corrected\_mvD.x,$$

$$corrected\_mv.y = mvP.y + corrected\_mvD.y.$$

7) Investigate the block in the reference picture pointed to by corrected_mv = (corrected_mv.x, corrected_mv.y) in the x-direction (460) using a different smoothness threshold.

8) The block in this position was found to be non-smooth in the x-direction, so get another bit to adapt corrected_mvD.x

into 2nd_corrected_mvD.x.

9) Calculate 2nd_corrected_mv from 2nd_corrected_mvD.

10) Investigate the block this motion vector is points at, but this time in the y-direction (430).

11) The block in this position was found to be non-smooth in the y-direction, so get another bit to adapt 2nd_corrected_mvD.y into 3rd_corrected_mvD.y.

12) Calculate 3nd_corrected_mv from 3nd_corrected_mvD.

13) Investigate the block this motion vector is points at, again in the y-direction (460).

14) The block in this position was found to be non-smooth in the y-direction, so get another bit to adapt 3nd_corrected_mvD.y into 4rd_corrected_mvD.y.

15) Calculate 4nd_corrected_mv from 4nd_corrected_mvD.

16) Finished.

According to another embodiment, the two directions are instead interleaved. Such an embodiment may be exemplified as follows:

1) through 6) same as above.

7) Investigate the block in the reference picture pointed to by corrected_mv = (corrected_mv.x, corrected_mv.y) in the y-direction (430).

8) The block in this position was found to be non-smooth in the y-direction, so get another bit to adapt corrected_mvD.y into 2nd_corrected_mvD.y.

9) Calculate 2nd_corrected_mv from 2nd_corrected_mvD.

10) Investigate the block this motion vector is points at, this time in the x-direction (460).

11) The block in this position was found to be non-smooth in the x-direction, so get another bit to adapt 2nd_corrected_mvD.x into 3rd_corrected_mvD.x.

12) Calculate 3nd_corrected_mv from 3nd_corrected_mvD.

13) Investigate the block this motion vector is points at in the y-direction (460).

14) The block in this position was found to be non-smooth in the y-direction, so get another bit to adapt 3nd_corrected_mvD.y into 4rd_corrected_mvD.y.

15) Calculate 4nd_corrected_mv from 4nd_corrected_mvD.

16) Finished.

According to a third embodiment, all investigations are executed in one position, such that only one measure needs to be calculated in each direction. Such an example may be exemplified as follows, where the smoothness value is compared to two thresholds, namely, s_high and s_low:

1) Calculate mvD = mv - mvP, or in more detail:

$$(mvD.x, mvD.y) = (mv.x, mv.y) - (mvP.x, mvP.y)$$

2) Calculate the adaptable_mvD = (adaptable_mvD.x, adaptable_mvD.y) from the mvD for both dimensions x and y. This can involve rounding odd values to the even value closer to zero, for example using

adaptable_mvD.x = round_to_zero(mvD.x),
adaptable_mvD.y = round_to_zero(mvD.y).

3) Calculate the adaptable motion vector adaptable_mv = (adaptable_mv.x, adaptable_mv.y) using

$$adaptable\_mv.x = mvP.x + adaptable\_mvD.x,$$

$$adaptable\_mv.y = mvP.y + adaptable\_mvD.y.$$

4) Investigate the block in the reference picture pointed to by adaptable_mv = (adaptable_mv.x, adaptable_mv.y) in the x-direction.

5) If the smoothness value is > s_high, get two extra bits for the x-direction. If s_low < smoothness_value < s_high, get one extra bit. If smoothness_value < s_low, get no more bits.

6) Investigate the block in the reference picture pointed to by adaptable_mv = (adaptable_mv.x, adaptable_mv.y) in the y-direction.

7) If the smoothness value is > s_high, get two extra bits for the y-direction. If s_low < smoothness_value < s_high, get one extra bit. If smoothness_value < s_low, get no more bits.

8) Calculate the corrected mvD (corrected_mvD.x, corrected.mvD.y) using the adaptable mvD and the extra bits sent in 5 and 7 (if any).

9) Calculate the corrected mv from the corrected mvD and mvP

When designing the ways to handle the bits of the adaptable mvD and the refinement bits in the encoder or decoder, respectively, it is advantageous if the bit burden for blocks which actually need a higher resolution, and thus one or more refinement bits, is not increased when the suggested method is applied.

In particular, the values -1, 0 and 1 are very common for the mvD, and, thus, codes used for these values should preferably not get any longer than if a conventional encoding/decoding method was to be applied. Such a requirement may pose a challenge, especially since the value 0 can already be expressed with one single bit in conventional encoding/decoding. Thus, in order to have any bit budget left to send refinement bits, the adaptable mvD has to be sent with less that one bit.

One way to solve the problem mentioned above is to distinguish the lower values -1, 0 and 1, here referred to as values comprised in a first set of values, from the remaining, higher, values comprised in a further set of values, such that the method described above is only used if an adaptable mvD component has a value which is not comprised in the first set of values. It is to be understood, that instead of using a first set of values comprising -1, 0 and 1, any other subset of lower values may be chosen to define a first set of values.

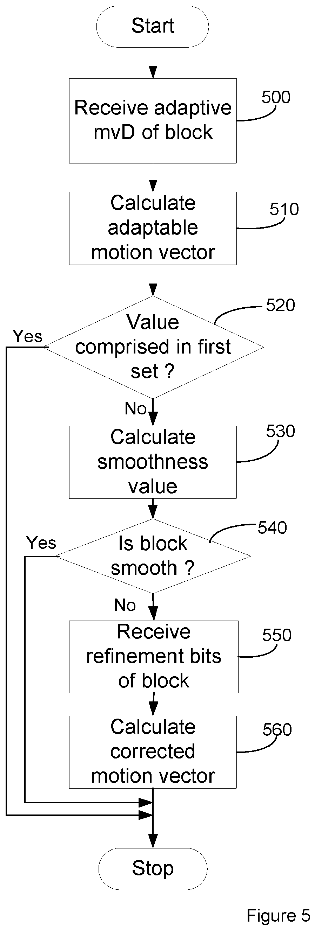

A method according to an alternative embodiment, such as the one suggested above, will now be described in further detail for a decoder, with reference to Fig. 5. In Fig. 5 an adaptable mvD is received and decoded, as indicated in the initial step 500. In another step 510, a motion vector is calculated. In another step 520, it is determined if the value of the mvD component in question (for instance the x-coordinate if we are investigating the x-direction) is comprised in a first set of values, as defined above. If this is the case, the described process is completed for the investigated direction, and thus, the received mvD will be considered to have an adequate resolution, in that direction.

If, however, in step 520 it is determined that the adaptable mvD has a value other than a value comprised in the first set of values, then the method continues by calculating a smoothness value, based on the adaptable motion vector, as indicated in step 530, and in a further step 540, the smoothness of the block is investigated. If the block is deemed not smooth in step 540, the decoder will expect one or more refinement bits, which are received in step 550, and in a subsequent step 560, the decoder calculates another, corrected, motion vector based on the mvD and the refinement bits, while the process is ended after step 540 if the block is instead deemed to be smooth. In the latter case the motion vector calculated in step 510 is considered to have a satisfying accuracy.

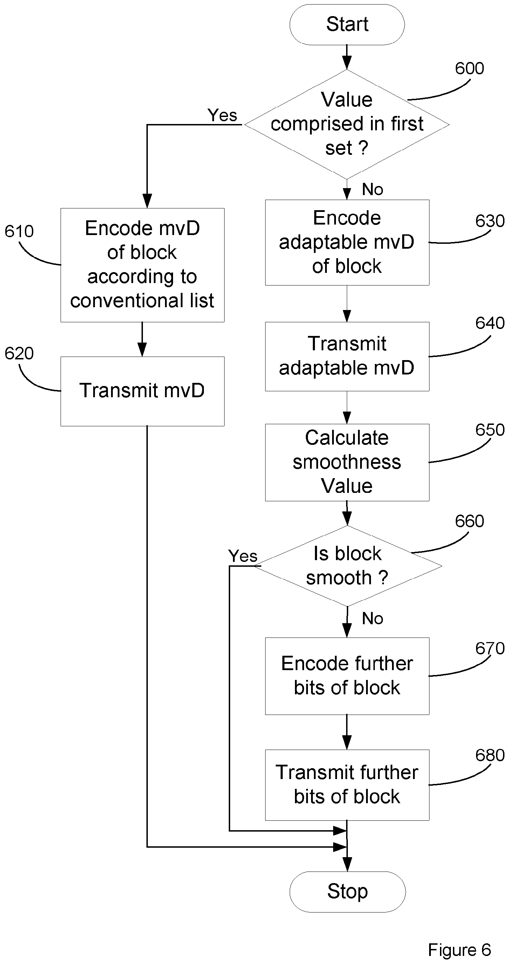

In a corresponding way, a method executed in an encoder will now be described with reference to Fig. 6, where in a first step 600 it is determined whether an mvD to be sent to a decoder has a value which is included in a pre-defined first set of values, for determining if an adaptable mvD is to be applied, or if a conventional method which does not provide the option of adapting the mvD, is instead to be applied. If the value of the mvD is comprised in the first set of values, a conventional list, i.e. the list according to Table 1 is applied during encoding, as indicated with step 610, and the resulting, non-adaptable mvD is transmitted in a subsequent step 620, after which the process is terminated for the respective direction.

If instead, the value of the mvD is not comprised in the first set of values, the suggested method is applied by first encoding an adaptable mvD of the block, as indicated in step 630, using a table allowing encoding of an approximate or an adaptable mvD according to an alternative table, such as e.g. table 2 as described below, followed by transmitting the adaptable mvD in another step 640, and calculating a smoothness value, as indicated in step 650. To calculate the smoothness value, the encoder must use the adaptable mvD to calculate an adaptable motion vector, and use this adaptable motion vector to select the block used for smoothness calculation. The reason why it cannot use the original motion vector is that this is unknown to the decoder, which only knows of the adaptable motion vector. In a next step 660, the smoothness of the block is investigated, for determining if any refinement bit(s) will be required. If the block is found to be smooth in step 660, the process is terminated for that direction, while in case it is not considered to be smooth, one or more further bit(s) are encoded, as indicated in step 670, and transmitted to the decoder in a subsequent step 680.

It is to be understood, that, in resemblance with Fig. 4, also in the embodiment of Fig. 6 the steps for investigating the smoothness of a block may alternatively be repeated in two or more steps, such that after each step, a new adaptable mvD is derived and used for determining the smoothness of the block in the respective direction.

Table 2a

| Value | code | Bit length |
|---|---|---|
| 2 | 0010 | 4 |
| -2 | 0011 | 4 |
| 4 | 000100 | 6 |
| -4 | 000101 | 6 |
| 6 | 000110 | 6 |
| -6 | 000111 | 6 |
| 8 | 00001000 | 8 |
| -8 | 00001001 | 8 |
| 10 | 00001010 | 8 |
| -10 | 00001011 | 8 |
| 12 | 00001100 | 8 |
| -12 | 00001101 | 8 |

As can be seen in Table 2a, as compared to Table 1, all odd values, positive, as well as negative, have been removed. As a result, the bit length is made one bit smaller than the corresponding codes applied in Table 1, such that e.g. -4 is now represented by 000100, i.e. 6 bits instead of the 7 bits which were required for the same value in Table 1. When encoding a number that is not in the table, for instance -5, the encoder must round that number to the nearest even number closer to zero. In the case of -5, it is thus first rounded to -4 and then represented by 000100.

It is also apparent that the only difference between values 2 and 3 in Table 1 is the second last bit. The same is true for all values of Table 1, where an even number k and the next odd number k+1 differs from each other only in the second last bit. What has to be done to Table 1 to arrive in Table 2a, which in the present context can be referred to as a "rougher" table, providing a lower accuracy, than Table 1, is simply to remove this specific bit for all values of Table 1. This table is now suitable to use for encoding and decoding an adaptable mvD.

An alternate embodiment of the encoder is to first create an adaptable mvD from the mvD, and then check if the relevant component of the adaptable mvD is in the first set of values. To do this, we could use Table 2b below, that uses the first three rows from Table 1 followed by all the rows from Table 2a, as shown below:

Table 2b

| Value | code | Bit length |
|---|---|---|
| 0 | 1 | 1 |
| 1 | 010 | 3 |
| -1 | 011 | 3 |
| 2 | 0010 | 4 |
| -2 | 0011 | 4 |
| 4 | 000100 | 6 |
| -4 | 000101 | 6 |
| 6 | 000110 | 6 |
| -6 | 000111 | 6 |
| 8 | 00001000 | 8 |
| -8 | 00001001 | 8 |
| 10 | 00001010 | 8 |
| -10 | 00001011 | 8 |

(continued)

| Value | code | Bit length |
|---|---|---|
| 12 | 00001100 | 8 |
| -12 | 00001101 | 8 |
| ... | ... | ... |

Assume for instance that the mvD equals (-1, 5). To create an adaptable mvD from this using Table 2b, we first look at the x-component. Since -1 is available in the table, this value is preserved without changing it. Hence the x-component of the adaptable mvD equals -1. Second we look at the y-component. Since 5 is missing from the table, we round this towards zero to an even number, arriving at 4. (The bit pattern 00100 will be the same as the bit pattern when using Table 1, except that the second-to-last bit has been removed.) The resulting adaptable mvD is thus (-1,4). Now we can check the components of this adaptable mvD. When checking the x-component, -1, we see that this belongs to a first set of values and should be transmitted with no checking of smoothness.

When checking the y-component, 4, we see that this does not belong to the first set of values, and hence we must check smoothness. We construct the adaptable motion vector using:

$$adaptable\_mv = mvP + adaptable\_mvD$$

and check the block that adaptable_mv points to. If it is not smooth we will send a further bit of data indicating that the y-component of the adaptable mvD should be corrected to 5. If it is smooth no more data will be sent.

The smoothness of a block may be investigated in a number of ways. According to one embodiment, the gradient in a respective image may be calculated and used for this purpose. If e.g. the luminance of pixel (x,y) block is represented by $L(x,y)$, two gradient images, $G_x(x,y)$, for the x-direction, and $G_y(x,y)$, for the y-direction, may be calculated. $G_x(x,y)$ can easily be calculated as $L(x+1,y)-L(x,y)$ for each pixel in the block, while, in a similar way $G_y(x,y)$ is calculated as $L(x,y+1)-L(x,y)$. Preferably we use an area which is slightly larger than the actual block is used to select the pixels to be used for calculating the gradient for the, such that if e.g. the block is a 8x8 pixel block, a 10x10 pixel, or even a 16x16 pixel area may be chosen. Thereby a "safety zone" around the area of pixels which will actually be considered may be provided. Since the pixels close to the edge of the applied area are not contributing so much (their FIR-filter coefficients are always small) a preferable choice may be to weight pixels close to the edge of this area with smaller weights than pixels located in the center of the area.

Alternatively, in order to save computation, instead of using all pixels of the selected area, a representative amount of pixels, such as e.g. only every second pixel, may be selected for calculation.

A smoothness value can be calculated in many different alternative ways. According to one embodiment, based on the average of the square of the gradient, the smoothness value in the x-direction can be derived as:

$$Smooth_x = (1/(w*h))*(\sum (G_x(x,y)*G_x(x,y)))  \qquad (3)$$

Where the summation is executed over all, or a predefined selection, of x and y in the selected area, and where w and h represent the width and height, of the pixel area, respectively.

The smoothness value for the y-direction is calculated in a corresponding way from $G_y(x,y)$.

This smoothness value may favor relatively large blocks, such that even a structure with a relatively big gradient in a limited part of the block may not result in a large smoothness value since the factor w*h will be relatively large for large blocks. Therefore, an alternative way to calculate the smoothness value may be to instead use the largest, i.e. the maximum, squared gradient in the block as a representative measure, such that:

$$Smooth_x = \max G_x(x,y)*G_x(x,y))  \qquad (4)$$

Where the maximum is taken over the entire block.

According to another alternative embodiment, which can also ameliorate the problem that large blocks are regarded as smooth, the square root of w*h is used instead of w*h, as applied in formula (3), such that:

$$Smooth_x = (1/sqrt(w*h))*( \sum (G_x(x,y)*G_x(x,y))) \tag{5}$$

Since multiplication can be quite expensive to perform, it may also be possible to replace it with the absolute value in any of the above formulae, such that e.g. formula (5) above is instead expressed as:

$$Smooth_x = (1/ (w*h))*(\sum abs(G_x(x,y)) \tag{6}$$

Where $abs(G_x(x,y))$ denotes the absolute value of $G_x(x,y)$.

The calculated smoothness value is then typically compared to a threshold value for determining whether it is representative of a smooth block or not, such that if the smoothness value is below the threshold value, the block is deemed to be smooth, while if the smoothness value is instead above the threshold, the block is deemed to be non-smooth.

One possibility is to use a fixed threshold. However, that may not be good, since an encoder operating at a higher bit rate will then make the same decision as an encoder operating at a lower bit rate. For a high-bit rate encoder, a single bit is not so much, but the distortion created by omitting it may be problematic. For a low-bit rate encoder, the situation is reversed; distortion is quite high anyway, so some extra distortion does not matter much, but every bit counts. Hence in this case, a bit is "worth more distortion" than for an encoder operating at a high bit rate.

The typical way to balance distortion version bits is to use "rate distortion optimization". Instead of minimizing rate (bits) and distortion separately, the following cost value is minimized:

cost = distortion_in_sum_squared_error + ( bits * lambda)

If we know the lambda, and if we can estimate the extra distortion we will have, we can use the above formula to create a threshold that decides whether or not we should increase the resolution of adaptive mvD or not.

We can estimate the distortion using the values calculated from the smoothness value above. For instance, if we start with equation (3),

$$Smooth_x = (1/(w*h))*( \sum (G_x(x,y)*G_x(x,y))) \tag{7}$$

it is reasonable to believe that the average distortion per pixel that we get from having an inexact motion vector in the x-coordinate should be proportional to the average gradient above. Hence,

average_dist_per_pixel = C * $Smooth_x$ = C * (1/(w*h)) * ($\sum (G_x(x,y)*G_x(x,y))$).

where C is a constant. However, the total distortion depends on the number of pixels; the more pixels we have with a certain distortion, the higher the total distortion. Hence we also multiply by the number of pixels:

total_distortion = w*h*C * $Smooth_x$ = C * ($\sum (G_x(x,y)*G_x(x,y))$).

Now we need to know the lambda. In the HEVC encoder, the lambda value is typically available in both the encoder and the decoder. Otherwise it can typically be calculated from the currentQP-value, which is always available, using the formula

lambda = 0.85 * pow( 2.0, (1.0*currentQP)/3.0 );

where pow(x,y) implements the power function $x^y$.

(The currentQP-value is the value regulating the bit rate in the encoder.) The number of bits we can save is one bit, since this is the difference between the bit sizes in tables 1 and 2. Hence "bits" equals 1 in the cost equation above. We can now calculate the costs for sending an extra bit and the cost for sending no extra bit.

When we send an extra bit we will not get any extra distortion but it will cost us the bit:

$$cost\_extra\ bit = 0 + 1 * lambda$$

When we avoid sending the extra bit we will get the distortion only:

$$cost\_no\_extra\_bit = extra\_distortion = C*w*h*Smooth_x$$

Now we simply have to choose the smallest cost; hence we should declare a block smooth and not send an extra bit if
cost_no_extra_bit < cost_extra_bit,
which equals

$$C * w * h * Smooth_x < 1*lambda$$

or

$$Smooth_x < lambda/(C*w*h) = threshold\_value$$

We can thus use the threshold value lambda/(C*w*h).
The constant C can be set to a fixed value. The optimal value may be obtained by trying different values of C for a number of sequences and see which value works best.
Alternatively, two different smoothness values may be calculated, e.g. by using two of the formulas mentioned above, after which the two values may be combined one way or the other. A block may e.g. be deemed to be smooth only if the average of the smoothness value is smaller that one first threshold value, while at the same time the maximum of the smoothness value is smaller than a second threshold value.

Table 3

| Value | code | Bit length |
|---|---|---|
| 0 | 1 | 1 |
| 1 | 010 | 3 |
| -1 | 011 | 3 |
| 2 | 0010 | 4 |
| -2 | 0011 | 4 |
| 4 | 000100 | 6 |
| -4 | 000101 | 6 |
| 6 | 000110 | 6 |
| -6 | 000111 | 6 |

Table 3 corresponds to Table 1 for the three first rows, such that, if the value is 0, 1 or - 1, the high precision value is obtained directly after which the process ends. If, however, a value other than 0,1 or -1 is handled, we will not apply the highest possible pixel resolution. In this case the integer pixel block closest to the adaptable mvD will be found, and the same smoothness value as was calculated in the encoder will be calculated in the decoder. If the smoothness value indicates that the block is smooth, no transmission of any refinement bits will be necessary. If, however, the smoothness value indicates that the block is a non-smooth block, one or more correction bits will be required, in order to get a higher accuracy. If e.g. the rough motion vector is 000100, i.e. has the value 4, and the block to which the adaptable mvD points has been deemed non-smooth, an extra bit will be required, in order to enable the decoder to determined whether the quarter pixel resolution is actually to be interpreted as 4 or 5. In the decoder, this is achieved by inserting a received bit between the last bit and the second last bit in the code word, and by decoding, using Table 1. If we assume that the received bit is 1, this refinement bit should be inserted into 000100, such that we get 0001010, which, according to Table 1, is equal to the value 5. By using Table 1 for decoding the refinement bits, it is easily seen that more bits than what is used by the original scheme will never be required.

As an alternative to the coding described above, arithmetic coding may instead be applied, where a binarization, such as e.g. the one presented in Fig. 7 may be created and used. According to Fig. 7, one context bit, here referred to as context A, is used for the first bit, as represented in the first column 700 from the left, while another context, referred to as context B, is used for the second bit, represented by the next column 710 to the right.

As can be seen in Figure 7, there are three more columns. The last column 740 describes whether the value is positive or negative. (This is not available for the first row, since it has value zero.) The second to last column 730 describes whether the value is an even value closer to zero (if the bit is set to zero) or an odd value further away from zero. (This column 730 is not available for the values 0, -1 and +1.) For all remaining columns, context C 720 is used. Here, a value closer to 0 should be slightly more probable than a value farther away. As for the sign bit 730, it should have a probability of exactly 0.5, so that no context will be required for that final bit.

The binarization in Figure 7 can be used with the present invention in the following way: When an adaptable mvD is sent, all bits except for the ones marked with 730 are sent. For instance, if the mvD is -4 or -5, the encoder will send 000101, and the decoder will interpret this binarization as the adaptable mvD = -4. Now, if the block is non-smooth, an extra bit will be sent to distinguish between -4 and -5: sending a '0' will mean that the corrected mvD component should be -4, and sending a '1' will mean that the corrected mvD component should be -5. In this way the present invention can be used together with arithmetic encoding.

Currently, the "rough", or approximate, position may, according to one embodiment, be applied using quarter pixel resolution if the adaptable mvD equals -1, 0 or 1, or half pixel resolution otherwise. It is also possible to apply the "rough" position using integer pixel resolution. According to one embodiment, Table 4 may be applied.

Table 4

| Value | code | Bit length |
|---|---|---|
| 0 | 1 | 1 |
| 1 | 010 | 3 |
| -1 | 011 | 3 |
| 2 | 0010 | 4 |
| -2 | 0011 | 4 |
| 4 | 00010 | 5 |
| -4 | 00011 | 5 |
| 8 | 0000100 | 7 |
| -8 | 0000101 | 7 |
| 12 | 0000110 | 7 |
| -12 | 0000111 | 7 |
| 16 | 000001000 | 9 |
| -16 | 000001001 | 9 |
| 20 | 000001010 | 9 |
| -20 | 000001011 | 9 |
| 24 | 000001100 | 9 |
| -24 | 000001101 | 9 |
| 26 | 000001110 | 9 |
| -26 | 000001111 | 9 |

As is obvious from Table 4, all values ranging between 4 and 7 are mapped to the value 4, while -4 and -7 are mapped to -4, and all values between 8 and 11 are mapped to 8, and so fourth. Since four values, as compared to Table 1, are mapped into one in this way, two bits as presented in Table 4 has been removed as compared to Table 1. More specifically, for these values, the second last bit and the third last bit have been removed from the representation as shown in Table 1.

The values available in Table 3 is hence: 0 1 2 4 8 12, 16 20 24 28 32 36 40 44 48... and the same value negated are also possible. This means that for the smallest values, i.e. -1, 0,1, here representing a first set of values, quarter pixel resolution will be applied, whereas for a second set of values, here representing 2 and 3, but mapped to value 2, half pixel resolution is applied, while for a third set of values, here representing 4, 8, 12, ..., integer pixel resolution is applied.

Refinement of rough motion vectors encoded as suggested above can come in two stages. Either the value is refined to a half pixel resolution, or all the way to a quarter pixel resolution. Assuming for instance that an mvD is required to be set to 7, this component is then mapped to 4 in such an integer version. After having investigated the smoothness value, it may be determined that another bit is required to obtain half-pixel resolution. By first sending the first of the two removed bits from the encoder, it will be possible to conclude in the decoder that the component is closer to 6 than it is to 4, and half pixel resolution is applicable. The smoothness value may then be investigated in another turn, wherein it is determined that a quarter pixel resolution is instead required. Thereby the other removed bit is sent from the encoder to the decoder, and thus end up with value 7. Alternatively, both bits may be sent at one single occasion.

Hence, the value 4 in Table 4 is the representative for all four values 4,5,6 and 7. It should be noted that it may be advantageous to use another representative, for instance 6, since it is closer to all values 4,5,6 and 7 than 4 is. On the other hand, this knowledge can instead be incorporated into the logic for selecting which block to calculate the smoothness value from. If we know that a 4 could mean any value between 4 and 7 we should make sure that the block covers also the motion vector component value 7.

It is even possible to go further so that an extra long motion vector will have an even lower resolution in the rough representation, every second pixel for values above 8, or every fourth pixel for values above 16.

Completely different configurations are also possible. In the embodiment, outlined with reference to Table 2, where may e.g. group values 2 and 3 together to one rough representation, while 4 and 5 are grouped together to another rough representation. Alternatively, 1 and 2 are grouped together, as well as 3 and 4, such that encoding and decoding according to table 5, as illustrated below, could instead be applied.

Table 5

| Value | Code | Bit length |
|---|---|---|
| 0 | 1 | 1 |
| 1 | 010 | 3 |
| -1 | 011 | 3 |
| 3 | 0010 | 4 |
| -3 | 0011 | 4 |
| 5 | 000100 | 6 |
| -5 | 000101 | 6 |
| 7 | 000110 | 6 |
| -7 | 000111 | 6 |
| 9 | 00001000 | 8 |
| -9 | 00001001 | 8 |
| 11 | 00001010 | 8 |
| -11 | 00001011 | 8 |
| 13 | 00001100 | 8 |
| -13 | 00001101 | 8 |
| 15 | 00001110 | 8 |
| -15 | 00001111 | 8 |

As can be seen in Table 5 all rough motion vectors will be odd instead of even. Now the extra bit that will be used will be used to differentiate 1 from 2 and 3 from 4 and so forth. This means that values 1 and -1 can be no longer than in Table 1 (3 plus correction bit =4), which is more than 3 as coded in Table 1). However, other values, such as e.g. 2, can become shorter if no refinement bit is needed (3 instead of 4).

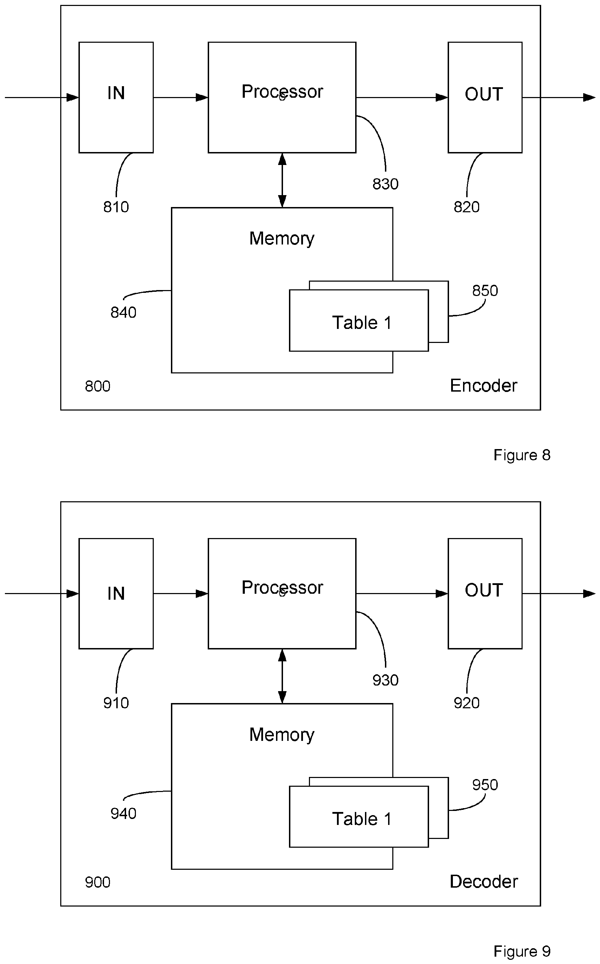

Accordingly, the above described encoder procedure is performed by an encoder which has been configured therefore. An example of an encoder is shown in figure 8.

The encoder 800 comprises at least an input section (IN) 810, an output section (OUT)820, one or more processors, here represented by processor 830, and one or more memory sections, here represented by one memory section 840.

The encoder 800 receives pictures to be encoded via the input section 810 and the processor 830 is configured to perform procedures according to one or more of the embodiments described above. The functionality of the processor 830 may be realized by software code portions stored in the one or more memory sections 840 and forming a computer program. The computer program may be stored in source code form, object code form, or in some intermediate form" such that when it is run by the processor it causes the processor to execute one of the processes described above...

The encoder may e.g. comprise separate memory sections for calculation of the motion vector, for determining whether a value of a mvD is comprised in a specific set of values, for calculating a smoothness vale. Further, the one or more memory sections 840 may also be used for storing one or more tables 850, such as e.g. the tables described above. When the pictures are coded, the coded pictures including respective adaptive mvDs are transmitted to the decoder via the output section 820. Such memory section may be based on fixed or removable digital data storage mechanisms, including but not limited to hard drives, flash memory, CDs, DVDs, minidisks, DATs, ROM, PROM, EPROM, RAM, DRAM, SRAM.

According to the embodiments described above, the encoder is also configured to send refinement bits when needed, i.e. if the block is not smooth.

Accordingly, the above described decoding procedure is performed by a decoder which has been configured therefore. An example of such a decoder is shown in figure 9.

The decoder 900 comprises at least an input section (IN) 910, an output section (OUT), one or more processors, here represented by processor 930, and one or more memory sections, here represented by memory section 940.

The decoder 900 receives encoded pictures and rough representation of the respective motion vector via the input section 910 and the processor is configured to perform the above described procedures. The decoder 900 is configured to make the considerations mentioned above and to receive refinement bits when needed, i.e. when the block is considered to be non-smooth. The functionality of the processor 930 may be realized by software code portions stored in the memory section 940, and forming a computer program. The computer program may be stored in source code form, object code form, or in some intermediate form, such that when it is run by the processor it causes the processor to execute one of the processes described above..

Further the memory section 940 may also be used for storing one or more tables 950. When the pictures are decoded, the decoded pictures are typically sent for display at an appropriate displaying equipment. Such memory section may be based on fixed or removable digital data storage mechanisms, including but not limited to hard drives, flash memory, CDs, DVDs, minidisks, DATs, ROM, PROM, EPROM, RAM, DRAM, SRAM.

Any of the computer programs mentioned above may also be arranged as a computer program product, which comprise computer readable instructions embedded on a computer readable medium and configured to cause on or more processors to perform one or more of the processes described in this document.

The above mentioned and described embodiments are only given as examples and should not be limiting to the present invention. Other solutions, uses, objectives, and functions within the scope of the invention as claimed in the below described patent claims should be apparent for the person skilled in the art.

**Claims**

1. A method executed in a decoder for acquiring a position of a reference block in a decoded version of a reference picture, comprising:

   - receiving, from an encoder, an approximate position of the reference block;
   - measuring the smoothness of pixels of the reference block in the approximate position;
   - comparing the measured smoothness to a threshold value, and
   - determining that the reference block is smooth, in case the measured smoothness is below the value, or
   - determining that the reference block is not smooth, and receiving, from the encoder, one or more further bits, thereby providing a refinement of the approximate position of the reference block, in case the measured smoothness exceeds the threshold value.

2. The method according to claim 1, wherein:

a) receiving, from the encoder, the approximate position of the reference block comprises receiving an adaptable motion vector difference, adaptable mvD, and decoding said adaptable mvD, and

b) determining whether the reference block is smooth or not comprise calculating a first motion vector on the basis of the adaptable mvD, the method further comprising the following steps to be executed in at least one of a horizontal or vertical direction:

c) investigating at least some pixels of said reference block, by calculating at least one smoothness value in a respective direction, and

d) receiving one or more further bits associated with said first motion vector in the respective direction, and calculating a second motion vector from a combination of said adaptable mvD and said further bits, in case the at least one smoothness value exceeds the threshold value.

3. The method according to claim 2, further comprising the steps of:

- determining, for a respective horizontal or vertical direction, whether the adaptable mvD has a value comprised in a first set of values, and
- applying steps b) - c) for said direction, in case the adaptable mvD has a value which is not comprised in the first set of values.

4. The method according to claim 3, wherein the first set of values comprises -1, 0 and 1.

5. The method according to any of claims 2-4, wherein the at least one smoothness value in a respective direction is based on the gradient calculated in the respective direction for a predefined plurality of pixels, associated with said reference block.

6. The method according to claim 5, wherein the at least one smoothness value is based on at least one of:

- the average of the absolute values or the squared values of said calculated values in the respective direction;
- the sum of the absolute values or the squared values of said calculated values in the respective direction, and
- the maximum of the absolute values or the squared values of said calculated values in the respective direction,

7. The method according to any of claims 1-6, wherein the threshold value is a dynamic threshold value and the method comprises the further step of determining said dynamic threshold value on the basis of the presently applied bit rate, wherein the threshold value is higher the lower the applied bit rate.

8. The method according to any of claims 2-7, wherein said decoding is based on a table of values arranged such that a set of lower table entries have a finer pixel resolution than each further set of higher table entries.

9. A decoder comprising:

- a processor and
- a memory storing instructions which when executed by the processor causes the processor to:
- receive, from an encoder, an approximate position of a reference block;
- measure the smoothness of pixels of the reference block in the approximate position;
- compare the measured smoothness to a threshold value, and
- determine that the reference block is smooth, in case the measured smoothness is below the threshold value, or
- determine that the reference block is not smooth, and receive, from the encoder, one or more further bits, thereby providing a refinement of the approximate position of the reference block, in case the measured smoothness exceeds the threshold value.

10. A decoder according to claim 9, comprising instructions which when executed by the decoder causes the processor to:

a) receive, from the encoder, the approximate position of the reference block by receiving an adaptable motion vector difference, adaptable mvD, and decode said adaptable mvD, and

b) determine whether the reference block is smooth or not by calculating a first motion vector on the basis of the adaptable mvD, after which the processor is caused to execute the following steps in at least one of a horizontal or vertical direction:

c) investigate at least some pixels of said reference block, by calculating at least one smoothness value in a respective direction, and

d) receive one or more further bits associated with said first motion vector in the respective direction, and calculating a second motion vector from a combination of said adaptable mvD and said further bits, in case the at least one smoothness value exceeds the threshold value.

11. A computer program, comprising computer readable code storable on a memory of a decoder, which computer readable code, when operated by a processor of the decoder, causes the decoder to operate as a decoder according to any of claims 9 or 10.

12. A computer program product comprising a computer readable medium and a computer program according to claim 11, wherein the computer program is stored on the computer readable medium.

13. A method executed in an encoder for providing a position of a reference block in a decoded version of a reference picture, comprising:

- transmitting, to a decoder, an approximate position of the reference block;
- measuring the smoothness of pixels of the reference block in the approximate position;
- comparing the measured smoothness to a threshold value, and
- determine that the reference block is smooth, in case the measured smoothness is below the threshold value, or
- determine that the reference block is not smooth, and transmit, to the decoder, one or more further bits, thereby providing a refinement of the approximate position, in case the measured smoothness exceeds the threshold value.

14. The method according to claim 13, comprising:

a) transmitting, to the decoder, the approximate position of the reference block by transmitting an encoded adaptable motion vector difference, adaptable mvD, and
b) determining whether the reference block is smooth or not by investigating at least some pixels of said reference block, and by calculating at least one smoothness value in a respective horizontal or vertical direction, and
c) transmitting, to said decoder, one or more further encoded bits associated with said adaptable mvD, in case the at least one smoothness value exceeds the threshold value.

15. The method according to claim 14, further comprising the steps of:

- determining, for a respective horizontal or vertical direction, whether the adaptable mvD has a value comprised in a first set of values, and
- applying steps b) - c) for said direction, in case the adaptable mvD has a value which is not comprised in the first set of values.

16. The method according to claim 15, wherein the first set of values comprises -1, 0 and 1.

17. The method according to any of claims 14-16, wherein the at least one smoothness value in a respective direction is based on the gradient calculated in the respective direction for a predefined plurality of pixels, associated with said block.

18. The method according to claim 17, wherein the at least one smoothness value is based on at least one of:

- the average of the absolute values or the squared values of said calculated values in the respective direction;
- the sum of the absolute values or the squared values of said calculated values in the respective direction, and
- the maximum of the absolute values or the squared values of said calculated values in the respective direction,

19. The method according to any of claims 13-18, wherein said threshold value is a dynamic threshold value and the method comprises the further step of determining said dynamic threshold value on the basis of the presently applied bit rate, wherein the threshold value is higher the lower the applied bit rate.

20. The method according to any of claims 14-19, wherein said encoding is based on a table of values arranged such that a set of lower table entries have a finer pixel resolution than each further set of higher table entries.

21. An encoder capable of providing a position of a reference block in a decoded version of a reference picture, comprising:

- a processor and
- a memory storing instructions which when executed by the processor causes the processor to:
- transmit, to a decoder, an approximate position of the reference block;
- measure the smoothness of pixels of the reference block in the approximate position;
- compare the measured smoothness to a threshold value, and determine that the reference block is smooth, in case the measured smoothness is below the threshold value, or
- determine that the reference block is not smooth, and transmit, to the decoder, one or more further bits, thereby providing a refinement of the approximate position, in case the measured smoothness exceeds the threshold value.

22. An encoder according to claim 21, comprising instructions which when executed by the processor causes the processor to:

a) transmit, to a decoder, the approximate position of the reference block by transmitting an encoded adaptable motion vector difference, adaptable mvD, and
b) determine whether the reference block is smooth or not by investigating at least some pixels in said reference block, and by calculating at least one smoothness value in a respective horizontal or vertical direction, and
c) transmit, to said decoder, one or more further encoded bits associated with said adaptable mvD, in case the at least one smoothness value exceeds the threshold value.

23. A computer program, comprising computer readable code storable on a memory of an encoder, which computer readable code, when operated by a processor of the encoder, causes the encoder to operate as an encoder according to any of claims 21 or 22.

24. A computer program product comprising a computer readable medium and a computer program according to claim 23, wherein the computer program is stored on the computer readable medium.

**Patentansprüche**

1. Verfahren, das in einem Decoder zum Erfassen einer Position eines Referenzblocks in einer decodierten Version eines Referenzbildes ausgeführt wird, umfassend:

- Empfangen einer ungefähren Position des Referenzblocks von einem Encoder;
- Messen der Glätte von Pixeln des Referenzblocks in der ungefähren Position;
- Vergleichen der gemessenen Glätte mit einem Schwellenwert und
- Bestimmen, dass der Referenzblock glatt ist, falls die gemessene Glätte unter dem Wert liegt, oder
- Bestimmen, dass der Referenzblock nicht glatt ist, und Empfangen eines oder mehrerer weiterer Bits vom Encoder, wodurch eine Verfeinerung der ungefähren Position des Referenzblocks erreicht wird, falls die gemessene Glätte den Schwellenwert überschreitet.

2. Verfahren nach Anspruch 1, wobei:

a) Empfangen der ungefähren Position des Referenzblocks vom Encoder, das Empfangen einer anpassbaren Bewegungsvektordifferenz, anpassbaren mvD, und das Decodieren der anpassbaren mvD umfasst, und
b) Bestimmen, ob der Referenzblock glatt ist oder nicht, umfassend das Berechnen eines ersten Bewegungsvektors auf der Grundlage der anpassbaren mvD, wobei das Verfahren ferner die folgenden Schritte umfasst, die in mindestens einer der horizontalen oder vertikalen Richtungen auszuführen sind:
c) Untersuchen mindestens einiger Pixel des Referenzblocks durch Berechnen mindestens eines Glättungswertes in einer entsprechenden Richtung, und
d) Empfangen eines oder mehrerer weiterer Bits, die dem ersten Bewegungsvektor in der jeweiligen Richtung zugeordnet sind, und Berechnen eines zweiten Bewegungsvektors aus einer Kombination der anpassbaren mvD und der weiteren Bits, falls der mindestens eine Glättungswert den Schwellenwert überschreitet.

3. Verfahren nach Anspruch 2, das ferner die folgenden Schritte umfasst:

- Bestimmen, ob die anpassbare mvD für eine jeweilige horizontale oder vertikale Richtung einen Wert aufweist, der in einem ersten Satz von Werten enthalten ist, und

- Anwenden der Schritte b) - c) für diese Richtung, falls die anpassbare mvD einen Wert aufweist, der nicht im ersten Satz von Werten enthalten ist.

4. Verfahren nach Anspruch 3, wobei der erste Satz von Werten -1, 0 und 1 umfasst.

5. Verfahren nach einem der Ansprüche 2 - 4, wobei der mindestens eine Glättungswert in einer jeweiligen Richtung auf dem in der jeweiligen Richtung berechneten Gradienten für eine vorbestimmte Vielzahl von Pixeln basiert, die dem Referenzblock zugeordnet sind.

6. Verfahren nach Anspruch 5, wobei der mindestens eine Glättungswert auf mindestens einem der Folgenden basiert:

- dem Mittel der Absolutwerte oder der quadrierten Werte der berechneten Werte in der jeweiligen Richtung;
- der Summe der Absolutwerte oder der quadrierten Werte der berechneten Werte in der jeweiligen Richtung, und
- dem Maximum der Absolutwerte oder der quadrierten Werte der berechneten Werte in der jeweiligen Richtung,

7. Verfahren nach einem der Ansprüche 1 - 6, wobei der Schwellenwert ein dynamischer Schwellenwert ist und das Verfahren den weiteren Schritt des Bestimmens des dynamischen Schwellenwertes auf der Grundlage der aktuell angewandten Bitrate umfasst, wobei der Schwellenwert höher ist, je niedriger die angewandte Bitrate ist.

8. Verfahren nach einem der Ansprüche 2 - 7, wobei das Decodieren auf einer Wertetabelle basiert, die so angeordnet ist, dass ein Satz von niedrigeren Tabelleneinträgen eine feinere Pixelauflösung aufweist als jeder weitere Satz von höheren Tabelleneinträgen.

9. Decoder, umfassend:

- einen Prozessor und
- einen Speicher zum Speichern von Anweisungen, die, wenn sie durch den Prozessor ausgeführt werden, den Prozessor zu Folgendem veranlassen:
- Empfangen einer ungefähren Position eines Referenzblocks von einem Encoder;
- Messen der Glätte von Pixeln des Referenzblocks in der ungefähren Position;
- Vergleichen der gemessenen Glätte mit einem Schwellenwert, und
- Bestimmen, dass der Referenzblock glatt ist, falls die gemessene Glätte unter dem Schwellenwert liegt, oder
- Bestimmen, dass der Referenzblock nicht glatt ist, und Empfangen eines oder mehrerer weiterer Bits vom Encoder, wodurch eine Verfeinerung der ungefähren Position des Referenzblocks erreicht wird, falls die gemessene Glätte den Schwellenwert überschreitet.

10. Decoder nach Anspruch 9, umfassend Anweisungen, die, wenn sie durch den Decoder ausgeführt werden, den Prozessor zu Folgendem veranlassen:

a) Empfangen der ungefähren Position des Referenzblocks vom Encoder durch Empfangen einer anpassbaren Bewegungsvektordifferenz, anpassbaren mvD, und Decodieren der anpassbaren mvD, und

b) Bestimmen, ob der Referenzblock glatt ist oder nicht durch Berechnen eines ersten Bewegungsvektors auf der Grundlage der anpassbaren mvD, woraufhin der Prozessor veranlasst wird, die folgenden Schritte in mindestens einer der horizontalen oder vertikalen Richtungen auszuführen:

c) Untersuchen mindestens einiger Pixel des Referenzblocks durch Berechnen mindestens eines Glättungswertes in einer entsprechenden Richtung, und

d) Empfangen eines oder mehrerer weiterer Bits, die dem ersten Bewegungsvektor in der jeweiligen Richtung zugeordnet sind, und Berechnen eines zweiten Bewegungsvektors aus einer Kombination der anpassbaren mvD und der weiteren Bits, falls der mindestens eine Glättungswert den Schwellenwert überschreitet.

11. Computerprogramm, umfassend einen computerlesbaren Code, der auf einem Speicher eines Decoders gespeichert werden kann, wobei der computerlesbare Code, wenn er von einem Prozessor des Decoders betrieben wird, bewirkt, dass der Decoder als Decoder nach einem der Ansprüche 9 oder 10 arbeitet.

12. Computerprogrammprodukt, umfassend ein computerlesbares Medium und ein Computerprogramm nach Anspruch 11, wobei das Computerprogramm auf dem computerlesbaren Medium gespeichert ist.

**13.** Verfahren, das in einem Encoder zum Bereitstellen einer Position eines Referenzblocks in einer decodierten Version eines Referenzbildes ausgeführt wird, umfassend:

- Übertragen einer ungefähren Position des Referenzblocks an einen Decoder;
- Messen der Glätte von Pixeln des Referenzblocks in der ungefähren Position;
- Vergleichen der gemessenen Glätte mit einem Schwellenwert und
- Bestimmen, dass der Referenzblock glatt ist, falls die gemessene Glätte unter dem Schwellenwert liegt, oder
- Bestimmen, dass der Referenzblock nicht glatt ist, und Übertragen eines oder mehrerer weiterer Bits an den Decoder, wodurch eine Verfeinerung der ungefähren Position erreicht wird, falls die gemessene Glätte den Schwellenwert überschreitet.

**14.** Verfahren nach Anspruch 13, umfassend:

a) Übertragen der ungefähren Position des Referenzblocks an den Decoder durch Übertragen einer codierten anpassbaren Bewegungsvektordifferenz, anpassbaren mvD, und
b) Bestimmen, ob der Referenzblock glatt ist oder nicht, durch Untersuchen mindestens einiger Pixel des Referenzblocks und durch Berechnen mindestens eines Glättungswertes in einer jeweiligen horizontalen oder vertikalen Richtung, und
c) Übertragen eines oder mehrerer weiterer codierter Bits, die der anpassbaren mvD zugeordnet sind, an den Decoder, falls der mindestens eine Glättungswert den Schwellenwert überschreitet.

**15.** Verfahren nach Anspruch 14, ferner umfassend die folgenden Schritte:

- Bestimmen, ob die anpassbare mvD für eine jeweilige horizontale oder vertikale Richtung einen Wert aufweist, der in einem ersten Satz von Werten enthalten ist, und
- Anwenden der Schritte b) - c) für diese Richtung, falls die anpassbare mvD einen Wert aufweist, der nicht im ersten Satz von Werten enthalten ist.

**16.** Verfahren nach Anspruch 15, wobei der erste Satz von Werten -1, 0 und 1 umfasst.

**17.** Verfahren nach einem der Ansprüche 14 - 16, wobei der mindestens eine Glättungswert in einer jeweiligen Richtung auf dem in der jeweiligen Richtung berechneten Gradienten für eine vorbestimmte Vielzahl von Pixeln basiert, die dem Block zugeordnet sind.

**18.** Verfahren nach Anspruch 17, wobei der mindestens eine Glättungswert auf mindestens einem der Folgenden basiert:

- dem Mittel der Absolutwerte oder der quadrierten Werte der berechneten Werte in der jeweiligen Richtung;
- der Summe der Absolutwerte oder der quadrierten Werte der berechneten Werte in der jeweiligen Richtung, und
- dem Maximum der Absolutwerte oder der quadrierten Werte der berechneten Werte in der jeweiligen Richtung,

**19.** Verfahren nach einem der Ansprüche 13 - 18, wobei der Schwellenwert ein dynamischer Schwellenwert ist und das Verfahren den weiteren Schritt des Bestimmens des dynamischen Schwellenwertes auf der Grundlage der aktuell angewandten Bitrate umfasst, wobei der Schwellenwert höher ist, je niedriger die angewandte Bitrate ist.

**20.** Verfahren nach einem der Ansprüche 14 - 19, wobei das Codieren auf einer Wertetabelle basiert, die so angeordnet ist, dass ein Satz von niedrigeren Tabelleneinträgen eine feinere Pixelauflösung aufweist als jeder weitere Satz von höheren Tabelleneinträgen.

**21.** Encoder, der eine Position eines Referenzblocks in einer decodierten Version eines Referenzbildes bereitstellen kann, umfassend:

- einen Prozessor und
- einen Speicher zum Speichern von Anweisungen, die, wenn sie durch den Prozessor ausgeführt werden, den Prozessor zu Folgendem veranlassen:
- Übertragen einer ungefähren Position des Referenzblocks an einen Decoder;
- Messen der Glätte von Pixeln des Referenzblocks in der ungefähren Position;
- Vergleichen der gemessenen Glätte mit einem Schwellenwert, und Bestimmen, dass der Referenzblock glatt ist, falls die gemessene Glätte unter dem Schwellenwert liegt, oder

- Bestimmen, dass der Referenzblock nicht glatt ist, und Übertragen eines oder mehrerer weiterer Bits an den Decoder, wodurch eine Verfeinerung der ungefähren Position erreicht wird, falls die gemessene Glätte den Schwellenwert überschreitet.

22. Encoder nach Anspruch 21, umfassend Anweisungen, die, wenn sie durch den Prozessor ausgeführt werden, den Prozessor zu Folgendem veranlassen:

   a) Übertragen der ungefähren Position des Referenzblocks an einen Decoder durch Übertragen einer codierten anpassbaren Bewegungsvektordifferenz, anpassbaren mvD, und
   b) Bestimmen, ob der Referenzblock glatt ist oder nicht, durch Untersuchen mindestens einiger Pixel in dem Referenzblock und durch Berechnen mindestens eines Glättungswertes in einer entsprechenden horizontalen oder vertikalen Richtung, und
   c) Übertragen eines oder mehrerer weiterer codierter Bits, die der anpassbaren mvD zugeordnet sind, an den Decoder, falls der mindestens eine Glättungswert den Schwellenwert überschreitet.

23. Computerprogramm, umfassend einen computerlesbaren Code, der auf einem Speicher eines Encoders gespeichert werden kann, wobei der computerlesbare Code, wenn er von einem Prozessor des Encoders betrieben wird, bewirkt, dass der Encoder als Encoder nach einem der Ansprüche 21 oder 22 arbeitet.

24. Computerprogrammprodukt, umfassend ein computerlesbares Medium und ein Computerprogramm nach Anspruch 23, wobei das Computerprogramm auf dem computerlesbaren Medium gespeichert ist.

**Revendications**

1. Procédé exécuté dans un décodeur pour acquérir une position d'un bloc de référence dans une version décodée d'une image de référence, comprenant :

   - la réception, depuis un encodeur, d'une position approximative du bloc de référence ;
   - la mesure de l'uniformité de pixels du bloc de référence dans la position approximative ;
   - la comparaison de l'uniformité mesurée à une valeur seuil, et
   - le fait de déterminer que le bloc de référence est uniforme, dans le cas où l'uniformité mesurée est inférieure à la valeur, ou
   - le fait de déterminer que le bloc de référence n'est pas uniforme, et la réception, depuis l'encodeur, d'un ou plusieurs bits supplémentaires, ce qui fournit un affinement de la position approximative du bloc de référence, dans le cas où l'uniformité mesurée dépasse la valeur seuil.

2. Procédé selon la revendication 1, dans lequel :

   a) la réception, depuis l'encodeur, de la position approximative du bloc de référence comprend la réception d'une différence de vecteur de mouvement ajustable, mvD ajustable, et le décodage de ladite mvD ajustable, et
   b) le fait de déterminer si le bloc de référence est uniforme ou non comprend le calcul d'un premier vecteur de mouvement sur la base de la mvD ajustable, le procédé comprenant en outre les étapes suivantes à exécuter dans au moins l'une parmi une direction horizontale ou verticale :
   c) l'examen d'au moins certains pixels dudit bloc de référence, en calculant au moins une valeur d'uniformité dans une direction respective, et
   d) la réception d'un ou plusieurs bits supplémentaires associés audit premier vecteur de mouvement dans la direction respective, et le calcul d'un deuxième vecteur de mouvement à partir d'une combinaison de ladite mvD ajustable et desdits bits supplémentaires, dans le cas où l'au moins une valeur d'uniformité dépasse la valeur seuil.

3. Procédé selon la revendication 2, comprenant en outre les étapes consistant à :

   - déterminer, pour une direction horizontale ou verticale respective, si la mvD ajustable a une valeur comprise dans un premier ensemble de valeurs, et
   - appliquer les étapes b) et c) pour ladite direction, dans le cas où la mvD ajustable a une valeur qui n'est pas comprise dans le premier ensemble de valeurs.

**4.** Procédé selon la revendication 3, dans lequel le premier ensemble de valeurs comprend -1,0 et 1.

**5.** Procédé selon l'une quelconque des revendications 2 à 4, dans lequel l'au moins une valeur d'uniformité dans une direction respective est basée sur le gradient calculé dans la direction respective pour une pluralité prédéfinie de pixels, associée audit bloc de référence.

**6.** Procédé selon la revendication 5, dans lequel l'au moins une valeur d'uniformité est basée sur au moins l'un parmi :

- la moyenne des valeurs absolues ou des valeurs au carré desdites valeurs calculées dans la direction respective ;
- la somme des valeurs absolues ou des valeurs au carré desdites valeurs calculées dans la direction respective, et
- le maximum des valeurs absolues ou des valeurs au carré desdites valeurs calculées dans la direction respective,

**7.** Procédé selon l'une quelconque des revendications 1 à 6, dans lequel la valeur seuil est une valeur seuil dynamique et le procédé comprend l'étape supplémentaire consistant à déterminer ladite valeur seuil dynamique sur la base du débit binaire actuellement appliqué, dans lequel plus le débit binaire appliqué est bas plus la valeur seuil est élevée.

**8.** Procédé selon l'une quelconque des revendications 2 à 7, dans lequel ledit décodage est basé sur une table de valeurs agencée de telle sorte qu'un ensemble d'entrées de table plus basses ont une résolution de pixel plus fine que chaque autre ensemble d'entrées de table plus élevées.

**9.** Décodeur comprenant :

- un processeur et
- une mémoire stockant des instructions qui lorsqu'elles sont exécutées par le processeur amènent le processeur à :
- recevoir, depuis un encodeur, une position approximative d'un bloc de référence ;
- mesurer l'uniformité de pixels du bloc de référence dans la position approximative ;
- comparer l'uniformité mesurée à une valeur seuil, et
- déterminer que le bloc de référence est uniforme, dans le cas où l'uniformité mesurée est inférieure à la valeur, ou
- déterminer que le bloc de référence n'est pas uniforme, et recevoir, depuis l'encodeur, un ou plusieurs bits supplémentaires, ce qui fournit un affinement de la position approximative du bloc de référence, dans le cas où l'uniformité mesurée dépasse la valeur seuil.

**10.** Décodeur selon la revendication 9, comprenant des instructions qui lorsqu'elles sont exécutées par le décodeur amènent le processeur à :

a) recevoir, depuis l'encodeur, la position approximative du bloc de référence en recevant une différence de vecteur de mouvement ajustable, mvD ajustable, et décoder ladite mvD ajustable, et
b) déterminer si le bloc de référence est uniforme ou non en calculant un premier vecteur de mouvement sur la base de la mvD ajustable, après quoi le processeur est amené à exécuter les étapes suivantes dans au moins l'une parmi une direction horizontale ou verticale :
c) examiner au moins certains pixels dudit bloc de référence, en calculant au moins une valeur d'uniformité dans une direction respective, et
d) recevoir un ou plusieurs bits supplémentaires associés audit premier vecteur de mouvement dans la direction respective, et calculer un deuxième vecteur de mouvement à partir d'une combinaison de ladite mvD ajustable et desdits bits supplémentaires, dans le cas où l'au moins une valeur d'uniformité dépasse la valeur seuil.

**11.** Programme informatique, comprenant un code lisible par un ordinateur pouvant être stocké sur une mémoire d'un décodeur, lequel code lisible par un ordinateur, lorsqu'il est exploité par un processeur du décodeur, amène le décodeur à fonctionner en tant que décodeur selon l'une quelconque des revendications 9 ou 10.

**12.** Produit programme informatique comprenant un support lisible par ordinateur et un programme informatique selon la revendication 11, dans lequel le programme informatique est stocké sur le support lisible par ordinateur.

**13.** Procédé exécuté dans un encodeur pour fournir une position d'un bloc de référence dans une version décodée d'une image de référence, comprenant :

- la transmission, à un décodeur, d'une position approximative du bloc de référence ;
- la mesure de l'uniformité de pixels du bloc de référence dans la position approximative ;
- la comparaison de l'uniformité mesurée à une valeur seuil, et
- déterminer que le bloc de référence est uniforme, dans le cas où l'uniformité mesurée est inférieure à la valeur, ou
- déterminer que le bloc de référence n'est pas uniforme, et transmettre, au décodeur, un ou plusieurs bits supplémentaires, ce qui fournit un affinement de la position approximative du bloc de référence, dans le cas où l'uniformité mesurée dépasse la valeur seuil.

**14.** Procédé selon la revendication 13, comprenant :

a) la transmission, au décodeur, de la position approximative du bloc de référence en transmettant une différence de vecteur de mouvement ajustable, mvD ajustable, codée et

b) le fait de déterminer si le bloc de référence est uniforme ou non en examinant au moins certains pixels dudit bloc de référence, et en calculant au moins une valeur d'uniformité dans une direction horizontale ou verticale respective, et

c) la transmission, audit décodeur, d'un ou plusieurs bits codés supplémentaires associés à ladite mvD ajustable, dans le cas où l'au moins une valeur d'uniformité dépasse la valeur seuil.

**15.** Procédé selon la revendication 14, comprenant en outre les étapes consistant à :

- déterminer, pour une direction horizontale ou verticale respective, si la mvD ajustable a une valeur comprise dans un premier ensemble de valeurs, et
- appliquer les étapes b) et c) pour ladite direction, dans le cas où la mvD ajustable a une valeur qui n'est pas comprise dans le premier ensemble de valeurs.

**16.** Procédé selon la revendication 15, dans lequel le premier ensemble de valeurs comprend -1,0 et 1.

**17.** Procédé selon l'une quelconque des revendications 14 à 16, dans lequel l'au moins une valeur d'uniformité dans une direction respective est basée sur le gradient calculé dans la direction respective pour une pluralité prédéfinie de pixels, associée audit bloc.

**18.** Procédé selon la revendication 17, dans lequel l'au moins une valeur d'uniformité est basée sur au moins l'une parmi :

- la moyenne des valeurs absolues ou des valeurs au carré desdites valeurs calculées dans la direction respective ;
- la somme des valeurs absolues ou des valeurs au carré desdites valeurs calculées dans la direction respective, et
- le maximum des valeurs absolues ou des valeurs au carré desdites valeurs calculées dans la direction respective,

**19.** Procédé selon l'une quelconque des revendications 13 à 18, dans lequel ladite valeur seuil est une valeur seuil dynamique et le procédé comprend l'étape supplémentaire consistant à déterminer ladite valeur seuil dynamique sur la base du débit binaire actuellement appliqué, dans lequel plus le débit binaire appliqué est bas plus la valeur seuil est élevée.

**20.** Procédé selon l'une quelconque des revendications 14 à 19, dans lequel ledit codage est basé sur une table de valeurs agencée de telle sorte qu'un ensemble d'entrées de table plus basses ont une résolution de pixel plus fine que chaque autre ensemble d'entrées de table plus élevées.

**21.** Encodeur capable de fournir une position d'un bloc de référence dans une version décodée d'une image de référence, comprenant :

- un processeur et
- une mémoire stockant des instructions qui lorsqu'elles sont exécutées par le processeur amènent le processeur à :

- transmettre, à un décodeur, une position approximative du bloc de référence ;

- mesurer l'uniformité de pixels du bloc de référence dans la position approximative ;

- comparer l'uniformité mesurée à une valeur seuil, et déterminer que le bloc de référence est uniforme, dans le cas où l'uniformité mesurée est inférieure à la valeur seuil, ou

- déterminer que le bloc de référence n'est pas uniforme, et transmettre, au décodeur, un ou plusieurs bits supplémentaires, ce qui fournit un affinement de la position approximative du bloc de référence, dans le cas où l'uniformité mesurée dépasse la valeur seuil.

22. Encodeur selon la revendication 21, comprenant des instructions qui lorsqu'elles sont exécutées par le processeur amènent le processeur à :

a) transmettre, à un décodeur, la position approximative du bloc de référence en transmettant une différence de vecteur de mouvement ajustable, mvD ajustable, codée ; et

b) déterminer si le bloc de référence est uniforme ou non en examinant au moins certains pixels dans ledit bloc de référence, et en calculant au moins une valeur d'uniformité dans une direction horizontale ou verticale respective, et

c) transmettre, audit décodeur, un ou plusieurs bits codés supplémentaires associés à ladite mvD ajustable, dans le cas où l'au moins une valeur d'uniformité dépasse la valeur seuil.

23. Programme informatique, comprenant un code lisible par un ordinateur pouvant être stocké sur une mémoire d'un encodeur, lequel code lisible par un ordinateur, lorsqu'il est exploité par un processeur de l'encodeur, amène l'encodeur à fonctionner en tant qu'encodeur selon l'une quelconque des revendications 21 ou 22.

24. Produit programme informatique comprenant un support lisible par ordinateur et un programme informatique selon la revendication 23, dans lequel le programme informatique est stocké sur le support lisible par ordinateur.

Figure 1

| Value | Binarization | | | | | | |
|-------|---|---|---|---|---|---|---|
| 0 | 1 | | | | | | |
| 1 | 0 | 1 | 0 | | | | |
| -1 | 0 | 1 | 1 | | | | |
| 2 | 0 | 0 | 1 | 0 | 0 | | |
| -2 | 0 | 0 | 1 | 0 | 1 | | |
| 3 | 0 | 0 | 1 | 1 | 0 | | |
| -3 | 0 | 0 | 1 | 1 | 1 | | |
| 4 | 0 | 0 | 0 | 1 | 0 | 0 | 0 |
| -4 | 0 | 0 | 0 | 1 | 0 | 0 | 1 |
| 5 | 0 | 0 | 0 | 1 | 0 | 1 | 0 |
| -5 | 0 | 0 | 0 | 1 | 0 | 1 | 1 |
| 6 | 0 | 0 | 0 | 1 | 1 | 0 | 0 |
| -6 | 0 | 0 | 0 | 1 | 1 | 0 | 1 |
| 7 | 0 | 0 | 0 | 1 | 1 | 1 | 0 |
| -7 | 0 | 0 | 0 | 1 | 1 | 1 | 1 |

730

740

700   710   720

Figure 7

Fig. 2a

Fig. 2b

Fig. 2c

Fig. 2d

Fig. 2e

Figure 3

Figure 4

Figure 5

Start

Value comprised in first set ? — 600

Yes

610 — Encode mvD of block according to conventional list

No

630 — Encode adaptable mvD of block

620 — Transmit mvD

640 — Transmit adaptable mvD

650 — Calculate smoothness Value

Is block smooth ? — 660

Yes

No

670 — Encode further bits of block

680 — Transmit further bits of block

Stop

Figure 6

Figure 8

Figure 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   WO 2011046587 A

**Non-patent literature cited in the description**

*   **LIWEI GUO et al.** *Adaptive motion vector resolution with implicit signalling*